# EUROPEAN PATENT SPECIFICATION

(11) **EP 4 207 023 B1**
(45) Date of publication and mention of the grant of the patent: **22.07.2026**
(21) Application number: 22854981.2
(22) Date of filing: 07.05.2022
(51) Int. Cl.: G06Q 10/10, G06Q 10/1093, G06F 3/0482

(54) **SCHEDULE CONFLICT PROCESSING METHOD, DEVICE, STORAGE MEDIUM, AND SOFTWARE PROGRAM PRODUCT**
PLANUNGSKONFLIKTVERARBEITUNGSVERFAHREN, VORRICHTUNG, SPEICHERMEDIUM UND SOFTWAREPROGRAMMPRODUKT
PROCÉDÉ DE TRAITEMENT DE CONFLIT D'HORAIRES, DISPOSITIF, SUPPORT DE STOCKAGE ET PRODUIT PROGRAMME LOGICIEL

(30) Priority: 09.08.2021 CN 202110909762
(43) Date of publication of application: 05.07.2023
(73) Proprietor: Honor Device Co., Ltd., Shenzhen, Guangdong 518040 (CN)
(72) Inventor: YANG, Yiwei, Shenzhen, Guangdong 518040 (CN)
(74) Representative: Körber, Martin Hans
(86) International application number: PCT/CN2022/091451
(87) International publication number: WO 2023/015986

(56) References cited:
- CN-A- 101 043 684
- CN-A- 101 043 684
- CN-A- 105 354 702
- CN-A- 109 118 154
- CN-A- 113 766 064
- CN-A- 113 780 976
- US-A1- 2006 015 386
- US-A1- 2012 004 942
- US-A1- 2014 365 107
- US-A1- 2018 039 478
- BENJAMIN A WONG ET AL: "Towards Conversational Speech Recognition for a Wearable Computer Based Appointment Scheduling Agent", INTERNET CITATION, 1 July 2002 (2002-07-01), XP007907220, Retrieved from the Internet <URL:http://smartech.gatech.edu/bitstream/1853/3269/1/02-17.pdf> [retrieved on 20090213]

## Description

### TECHNICAL FIELD

This application relates to the field of software development technologies, and in particular, to a schedule conflict processing method, an electronic device, a storage medium, and a software program product.

### BACKGROUND

Schedule management is one of the common functions supported by various client applications. For example, applications such as a calendar and a mailbox can support users to create and manage schedules. During management on schedules by a user, a situation that there are a plurality of schedules in one day and there may be conflicts between different schedules often occurs. For example, two schedules overlap in time, and execution of one schedule will cause a failure of execution of the other schedule.

At present, one way to deal with a schedule conflict is that: only when the user creates a new schedule and it is found that the newly-created schedule conflicts with another schedule having been created in time, the user is asked whether to confirm the creation; and for whether there is a conflict between a plurality of schedules having been created, there will be no prompt and no management mechanism for dealing with conflicts, and it depends entirely on subjective memory or analysis of the user. Based on this, a solution is urgently needed to resolve the problem.

CN 101 043 684 A discloses a schedule conflict processing method, comprising the steps of: receiving a schedule input of a user in a schedule management mode, determining whether the currently input new schedule overlaps with previously stored schedules when the user completes setting the new schedule, and informing the user of the existence of the conflicting schedules through a pop-up window if conflicting schedules exist.

US 2018/039478 A1 discloses a method in which the user can reschedule an appointment by voice input and it is automatically determined whether there is a conflict between the rescheduled appointment and another scheduled appointment.

### SUMMARY

To solve the problem of performing conflict prompting and processing for a plurality of created schedules to be executed after creation of a new schedule without requiring a user to subjectively analyze whether a conflict exists, embodiments of the present application provides a schedule conflict processing method, an electronic device, a storage medium, and a software program product according to the enclosed independent claims. Advantageous features of the present invention are defined in the corresponding subclaims. In the following, parts of the description and drawings referring to embodiments, which are not covered by the claims, are not presented as embodiments of the invention but as examples useful for understanding the invention.

According to a first aspect, the technical solution of this application provides a schedule conflict processing method, including: determining existence of a schedule conflict; displaying a first interface, where the first interface includes at least one control, and the at least one control is configured to prompt a user of the existence of the schedule conflict; detecting a target operation on the at least one control; and displaying at least one processing interface in response to the target operation, where the at least one processing interface is configured to process schedule conflicts.

In a possible implementation, the at least one control includes a first pop-up window; and the displaying a first interface includes: displaying the first pop-up window, and displaying first text in the first pop-up window, where the first text is used for expressing semantics of existence of a conflict between at least two schedules.

In a possible implementation, the at least one control further includes a first button; and the displaying a first interface further includes: displaying the first button in the first pop-up window.

In a possible implementation, the detecting a target operation on the at least one control includes: detecting a first operation on the first button; and the displaying at least one processing interface in response to the target operation includes: displaying a first processing interface in response to the first operation, where the first processing interface is configured to modify a schedule time.
In a possible implementation, after the displaying a first processing interface, the method further includes: displaying conflicting schedules on the first processing interface; and detecting a second operation by the user on the conflicting schedules, and performing a first processing operation corresponding to the second operation, where the second operation includes one of dragging, long pressing, clicking, and double-clicking; and the first processing operation includes: modifying a time of a dragged schedule according to a dragging operation by the user; or popping up, according to one operation of long pressing, clicking, and double-clicking by the user, a time selector to modify a time of a selected schedule.

In a possible implementation, the at least one control further includes a first label used for waking up a voice assistant; the displaying a first interface further includes: displaying the first label in the first pop-up window; the detecting a target operation on the at least one control includes: detecting a third operation on the first label; and after the detecting a target operation on the at least one control, the method further includes: triggering the voice assistant to broadcast the first text through voice.

In a possible implementation, the at least one control further includes a second label; and the displaying a first interface includes: displaying a schedule list; and displaying the second label in a display region corresponding to conflicting schedules in the schedule list, where semantics of the text displayed on the second label is conflicting.

In a possible implementation, the detecting a target operation on the at least one control includes: detecting a fourth operation on the second label or a display region corresponding to the second label; and the displaying at least one processing interface in response to the target operation includes: displaying a second processing interface in response to the fourth operation.

In a possible implementation, after the displaying a second processing interface, the method further includes: displaying at least one candidate item used for conflict processing on the second processing interface, where the at least one candidate item includes at least one of the following candidate items: reminding, entrusting, asking for leave, ignoring, deleting, and rejecting.

In a possible implementation, after the displaying at least one candidate item used for conflict processing on the second processing interface, the method further includes: detecting a selection operation on the at least one candidate item, and performing a second processing operation, where the second processing operation includes any one of the following processing operations: detecting a fifth operation on the reminding candidate item, and jumping to a reminding setting interface; jumping to a first email editing interface after a sixth operation on the entrusting candidate item is detected, where a recipient of the first email editing interface is an entrusted party; jumping to a second email editing interface after a seventh operation on the ask-for-leave candidate item is detected, where a recipient of the second email editing interface is a leave approval party; and a selected schedule is respectively ignored, deleted, or rejected after it is detected that the user performs an eighth operation with the ignoring candidate item, the deleting candidate item, or the rejecting candidate item as an operation object.

In a possible implementation, after the performing a first processing operation corresponding to the second operation, or after the performing a second processing operation, the method further includes: refreshing the at least one control according to the first processing operation or the second processing operation.

According to a second aspect, the technical solution of this application further provides an electronic device, including a memory configured to store program instructions and a processor configured to execute the program instructions, the program instructions, when executed by the processor, triggering the electronic device to perform the method according to any one of the first aspect described above.

According to a third aspect, the technical solution of this application further provides a storage medium, storing program instructions, the program instructions, when run on an electronic device, causing the electronic device to perform the method according to any one of the first aspect described above.

According to a fourth aspect, the technical solution of this application further provides a software program product, including program instructions, the program instructions, when run on an electronic device, causing the electronic device to perform the method according to any one of the second aspect described above.

According to the method, the device, the storage medium, and the software program product provided in the embodiments of this application, after a schedule is created, if it is determined that there is a schedule conflict, a user will be prompted of the conflict on a corresponding interface, and an entry for the user to process the conflict will be provided to guide the user to process the conflict, so that the user can be informed of the conflict situation in time and perform processing, thereby reducing dependence on the user's subjective consciousness, reducing occurrence of situations such as scheduling confusion caused by the user's subjective forgetting of conflicts, and helping improve user experience.

### BRIEF DESCRIPTION OF DRAWINGS

FIG. 1 is a schematic diagram of an example of an application scenario of a technical solution of this application;
FIG. 2 is a schematic diagram of opening a calendar APP month view interface (with a conflict prompt) by a user;
FIG. 3 is a schematic diagram of opening a calendar APP month view interface (without a conflict prompt) by a user before implementation of a technical solution of this application;
FIG. 4 is a schematic diagram of a software architecture of a schedule conflict processing method according to an embodiment of this application;
FIG. 5A and FIG. 5B are a flowchart of signaling between functional modules in a software architecture in a schedule conflict processing method according to an embodiment of this application;
FIG. 6 is a schematic diagram of an interface example of performing schedule conflict prompting based on a schedule invitation email in a schedule conflict processing method according to an embodiment of this application;
FIG. 7 is a schematic diagram of an interface example of prompting a schedule conflict based on an email in a schedule conflict processing method according to an embodiment of this application;
FIG. 8A and FIG. 8B are a schematic diagram of three interface examples corresponding to modifying a schedule time in a schedule conflict processing method according to an embodiment of this application;
FIG. 9 is a schematic diagram of an interface example of a first pop-up window in a possible implementation in a schedule conflict processing method according to an embodiment of this application;
FIG. 10 is an exemplary diagram of a schedule detail interface in a possible implementation in a schedule conflict processing method according to an embodiment of this application;
FIG. 11 is a schematic diagram of an example of a create-new-email interface opened after entrusting processing in a schedule conflict processing method according to an embodiment of this application;
FIG. 12 is a schematic diagram of an example of a month view interface after conflict processing in a schedule conflict processing method according to an embodiment of this application;
FIG. 13 is a schematic diagram of performing a conflict prompt through a desktop card in an embodiment of a schedule conflict processing method according to an embodiment of this application;
FIG. 14 is a schematic flowchart of an embodiment of a schedule conflict processing method according to an embodiment of this application;
FIG. 15 is a schematic diagram of an example of a month view interface in still another possible implementation in a schedule conflict processing method according to an embodiment of this application;
FIG. 16 is another schematic diagram of an example of a month view interface after conflict processing in a schedule conflict processing method according to an embodiment of this application;
FIG. 17 is a schematic diagram of a software layered framework of a schedule conflict processing method according to an embodiment of this application;
FIG. 18 is a flowchart of signaling between modules in the software layered architecture shown in FIG. 13;
FIG. 19 is a schematic diagram of a hardware structure of an embodiment of an electronic device according to an embodiment of this application; and
FIG. 20 is a schematic diagram of a hardware structure of another embodiment of an electronic device according to an embodiment of this application.

### DESCRIPTION OF EMBODIMENTS

The following describes technical solutions of this application with reference to accompanying drawings.

In an application scenario of schedule management, APPs that support schedule management, such as calendars, lack explicit prompts for conflicts between different schedules that have been written into a schedule list, which makes it difficult for users to find schedule conflicts.

In view of this, the embodiments of this application provide a solution, in which after a new schedule is created, schedule information of a plurality of schedules in the schedule list is queried for, whether there is a conflict between different schedules is detected, and after a conflict is found, the user is prompted of the conflict, and guided to manage the conflicting schedules, thereby providing the user with a convenient conflict processing mechanism to deal with schedule conflict problems.

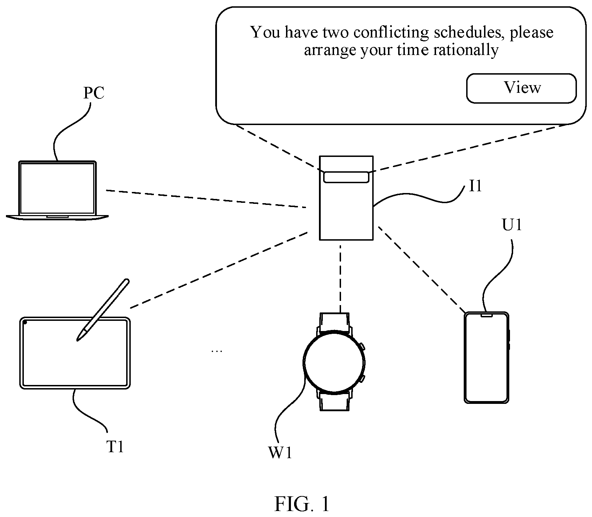

Referring to FIG. 1, the schedule conflict processing method provided in the embodiments of this application is applicable to schedule management scenarios implemented based on various terminal devices. For example, the method is applicable to wearable electronic devices such as a mobile phone U1, a tablet computer T1, a personal computer (personal computer, PC), and a smart watch W1 shown in FIG. 1, and is also applicable to a personal digital assistant (personal digital assistant, PDA), an augmented reality (augmented reality, AR) device, a virtual reality (virtual reality, VR) device, and various teaching auxiliary tools (such as a learning machine and an early education machine) not shown in FIG. 1. In an actual application scenario, a conflict prompt shown in FIG. 1 may be performed on a user interaction interface (such as an interface I1 shown in FIG. 1) of a corresponding application based on the foregoing devices, for example, performing a corresponding conflict prompt during schedule management performed through a PC-side mailbox, or prompting which courses are in conflict during schedule (subjects or learning items) arrangement through a learning machine. The application (that is, a first application) configured to realize the solution of this application may be any application product that supports a schedule management function, for example, various client applications that support schedule management such as a calendar, a mailbox, and a memo.

A typical application scenario to which the solution provided in the embodiments of this application is applicable is a schedule management scenario in a calendar APP. The following uses the schedule management scenario in the calendar APP based on intelligent operation as an example to describe the solution provided in the embodiments of this application.

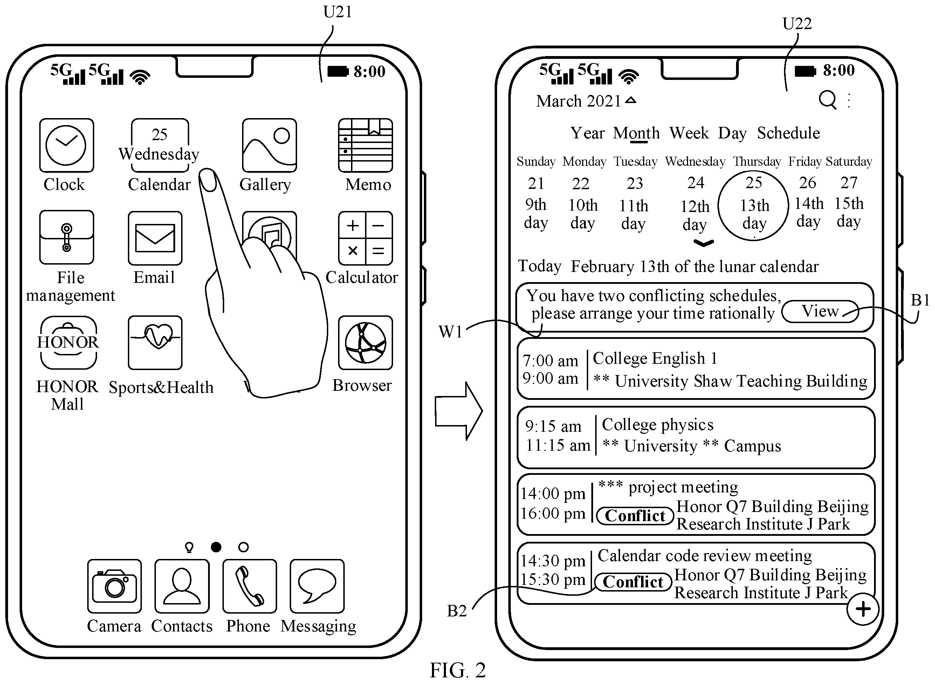

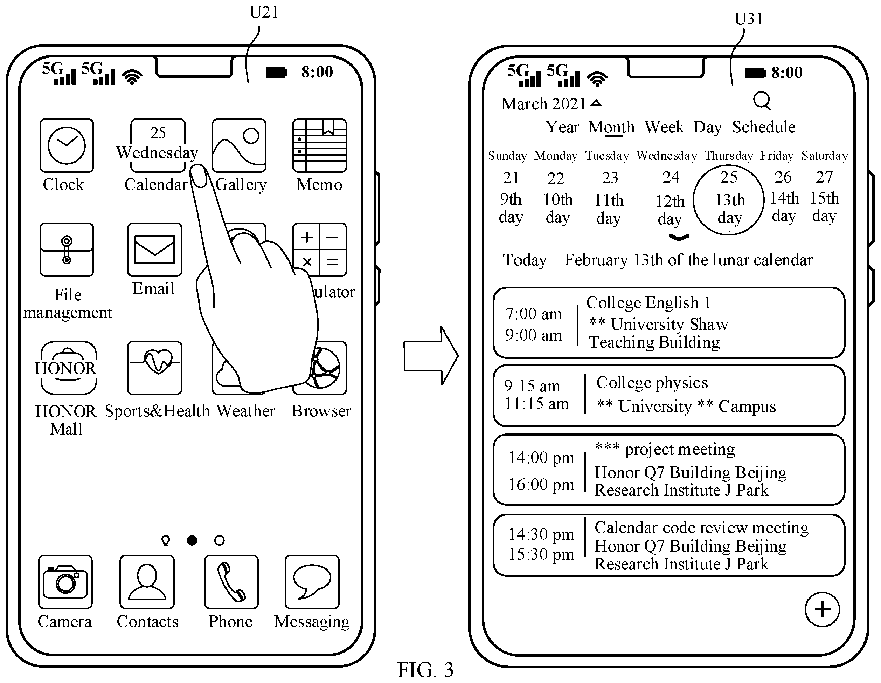

Referring to FIG. 2, for example, the current date is March 25, 2021, and the user clicks an icon corresponding to the calendar APP on the main interface U21 of the mobile phone, and a month view interface U22 shown in FIG. 2 can be opened. The user has created four schedules on the date, and the schedule titles are: "College English 1", "College physics", "*** project meeting", and "Calendar code review meeting" respectively. The schedule "*** project meeting" from 14:00 to 16:00 in the afternoon conflicts with the schedule "Calendar code review meeting" from 14:30 to 15:30 in the afternoon. Based on the schedule conflict processing method provided in the embodiments of this application, a conflict prompt will be performed in the opened month view interface U22. Referring to FIG. 3, in a case that no conflict prompt is performed in the related art, after the calendar icon is clicked, an original month view interface U31 shown in FIG. 3 can be opened, and only the plurality of schedules corresponding to the current day can be displayed on the original month view interface U31.

Specifically, the embodiments of this application provide the following method to deal with a schedule conflict problem: Information of schedules to be executed is queried for; and a first interface is displayed after existence of a schedule conflict is determined, where the first interface includes at least one control, and the at least one control is configured to prompt a user of the existence of the schedule conflict. For example, the at least one control may include pop-up windows, buttons, labels, and the like. Manners in which the user is prompted of the existence of the schedule conflict based on the at least one control may be displaying text, graphics, a symbol marker, or the like representing the semantics of "conflicting" on a control. Subsequently, if a target operation on the at least one control is detected, at least one processing interface for processing schedule conflicts is displayed in response to the target operation. The processing interface includes a full-screen display interface, and may alternatively include a control display interface, for example, a pop-up window interface. The target operation may be a click operation, a long pressing operation, or the like.

It should be noted that, the displaying a first interface may be performed in response to the user's instruction to open the first interface, instead of triggering display of the first interface when a schedule conflict is detected. A trigger condition of the first interface may be a user operation. For example, the first interface may be a month view interface, and the user clicks the calendar icon, then display of the month view interface is triggered. At least one control for used for conflict prompting is displayed in the displayed month view interface.

Generally, only for the schedules that have been created, corresponding schedule information can be found. Therefore, to query for information of schedules to be executed is to query for a plurality of schedules that have been created, and objects of the query is the schedules to be executed, excluding expired schedules and schedules rejected by the user. In addition, in a possible implementation, the plurality of schedules that are queried for are a plurality of schedules currently selected by the user.

In a possible implementation, in a case that it is detected that the user requests to open any "date" or "day" in the calendar APP, whether there is a conflict between the plurality of schedules on the date corresponding to a number clicked by the user is queried for. That is, the trigger timing for detecting whether there is a conflict between a plurality of schedules in a schedule list may be that the user performs operations, such as clicking, on a calendar icon or any number representing a date in the calendar month view interface. For example, referring to FIG. 2, the current date is March 25, so that when the user clicks the calendar icon, it is defaulted that the user clicks the number 25. In the opened month view interface, the number "25" is in a selected state. Whether there is a conflict between the plurality of schedules that need to be executed on March 25 in time is queried for.

The user may click other dates in the month view interface U22 shown in FIG. 2. For example, if the user clicks the number "27", 27 is in the selected state, and the schedule queried for is a schedule corresponding to 27th. In a possible implementation, querying for information of the schedules to be executed includes first determining whether there are two or more schedules corresponding to the current day, and if there is only one schedule, no subsequent steps need to be performed.

In another possible implementation, conflict detection may alternatively be set periodically, for example, performing regular query every day, and querying for whether there is conflict between the plurality of schedules to be executed on the current day at 12:00 am or another predetermined time every day; or querying for a plurality of schedules and detecting whether there is a conflict before users' wake-up time for different users according to the wake-up time of the users intelligently identified.

In still another possible implementation, the trigger timing for detecting a schedule conflict may alternatively be a time point for new schedule creating or schedule synchronization, for example, when creating a new schedule, determining whether the new schedule conflicts with an existing schedule according to the time of the new schedule. For schedule synchronization, a schedule time of each synchronized schedule is acquired respectively, and whether the schedule time conflicts with an existing schedule is determined through comparison respectively.

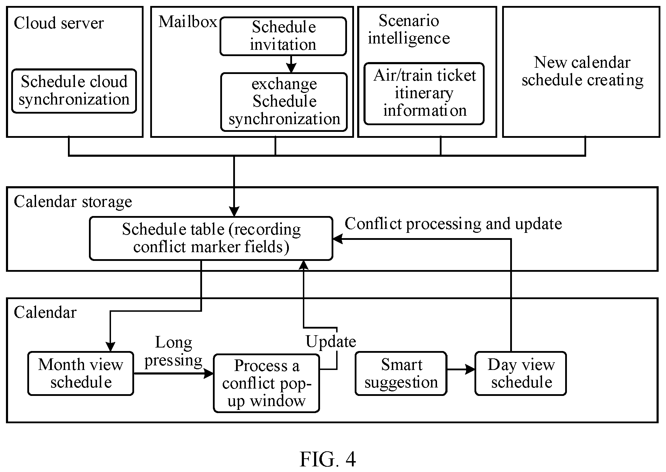

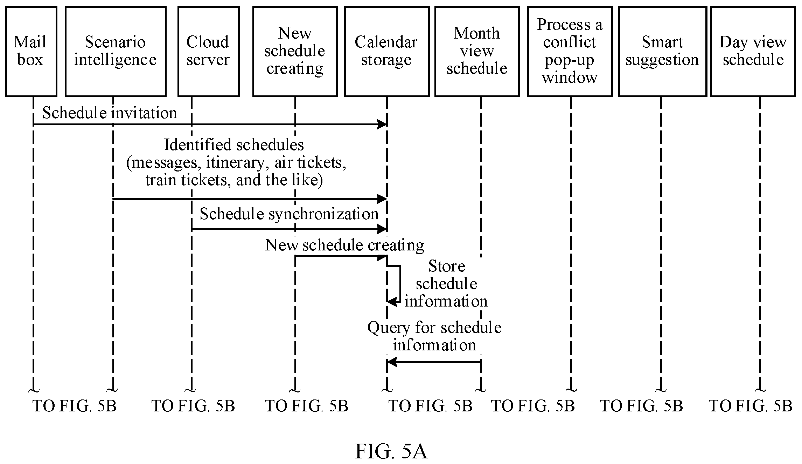

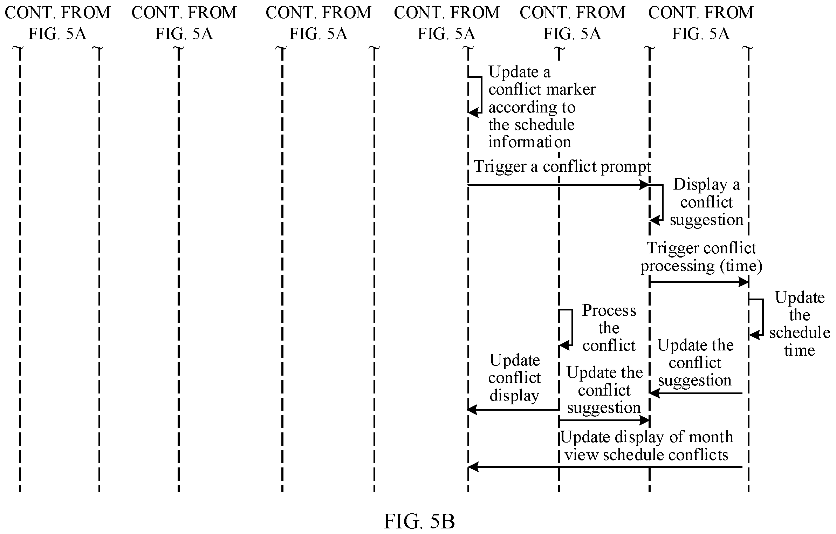

It should be noted that, referring to FIG. 4, FIG. 5A, and FIG. 5B, the schedule information in the schedule list may come from the following several ways:

New schedule creating: the local schedule information obtained by the user by performing new schedule creating on a terminal device, where information of this type of schedules such as address fields, time fields, and event names are all inputted by the user.

Schedule synchronization:
importing a plurality of pieces of schedule information created by the user based on an email account, or schedule information in a schedule invitation received by the user through the mailbox, into the schedule list to realize synchronization with the mailbox schedules;
schedule information intelligently identified from shared data provided by a third-party application, where for example, the third-party application may be a Short Message Service (Short Message Service, SMS) application, itinerary, travel, or any service application that supports the ordering of train tickets, air tickets, and bus tickets, and after a data access permission is obtained, the data content thereof is analyzed and identified, and schedule information is extracted from the data content; and
synchronizing schedule information based on a cloud server, where a user with a cloud server account may choose to upload schedule information of clients to the cloud server, so that the same user's schedule information is obtained through the cloud server, and the user does not need to repeatedly create the same schedule on different clients; and one creation can be synchronized on other clients, thereby reducing the tedious operation of repeatedly creating a new schedule.

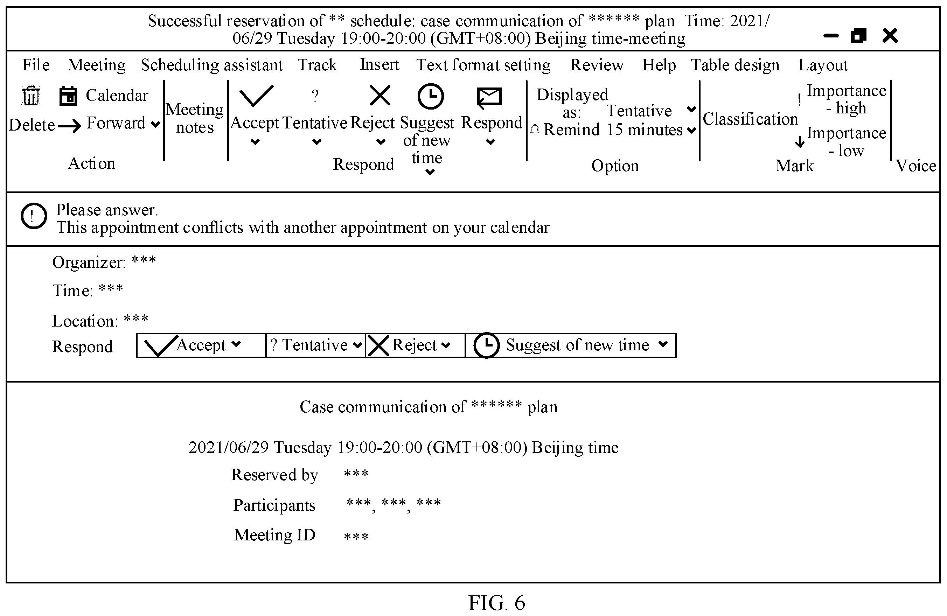

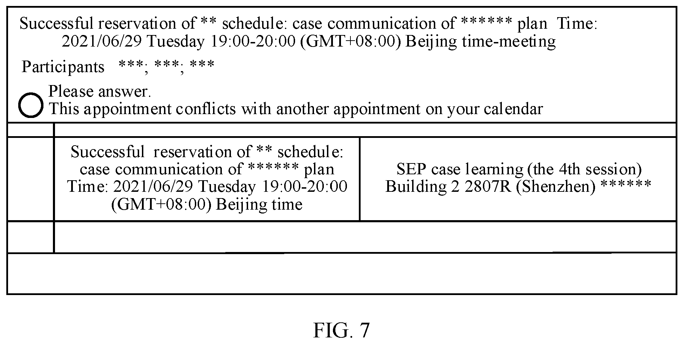

For example, referring to FIG. 6, which shows an example of an email interface for performing a schedule invitation through an email. The user receives a schedule invitation with the schedule name "case communication of ****** plan" initiated by the booker, and after it is detected that the user accepts the invitation, the schedule is added to a schedule list. In addition, in a possible implementation, after it is detected that the user accepts the invitation, whether the time of the schedule conflicts with other schedules on the same day is queried for. If it is determined that there is a conflict, a text label or button is displayed on the email interface to prompt the user that there is a conflict. For example, referring to FIG. 6, a text label "Please answer. This appointment conflicts with another appointment on your calendar" is displayed on the email interface, to prompt the user that there is a conflict, where "appointment" is schedule. After the user clicks the text label, the interface shown in FIG. 7 is displayed. On the interface, at least two conflicting schedules are displayed side by side. For example, the schedule "case communication of ****** plan" and another schedule "SEP case learning (the 4th session) ..." are displayed side by side to prompt the user that there is a conflict between the two schedules.

It should be noted that, in some implementations, the detection (query) of existence conflicting objects is limited to a plurality of schedules on the same day, and conflict detection is not performed for cross-day schedules and all-day schedules. In another implementation, an all-day schedule or a cross-day schedule may be used as a query object. The following uses a plurality of schedules within the same day as detection objects for an exemplary description.

It should be noted that, in the embodiments of this application, conflicting includes conflicts in either of the time dimension and the spatial dimension, and generally refers to conflicts in time, that is, the occurrence times of two or more schedules overlap. Further, conflicting also refers to conflicts in locations, for example, the time of one schedule created by the user is from 14:00 to 16:00 in the afternoon, and the time of another schedule is from 16:00 to 17:00 in the afternoon. Although the times of the two schedules have no conflict, the location of the former schedule is city A, the location of the latter schedule is city B, and it is impossible for the user to go from city A to city B instantly. Therefore, these two schedules also conflict with each other. This situation is also determined as conflicting.

In a possible implementation, the times of different schedules are queried for, and if the times overlap, it is determined that there is a conflict between the two or more schedules. According to an embodiment of this application, for two schedules between which a time difference is less than a preset duration, location information is further acquired. If the two locations are relatively far apart, arrival cannot be realized based on the existing means of transportation within the preset duration, it is determined that there is a conflict between the two schedules. Referring to FIG. 4, FIG. 5A, and FIG. 5B, schedule conflict prompting and processing can be implemented based on a calendar storage module and a calendar module. The calendar module includes a month view schedule unit, a pop-up window unit for processing conflicts, a smart suggestion unit, and a day view schedule unit; and the calendar storage module stores a schedule table, used for maintaining schedule information of a plurality of schedules. For example, in the schedule conflict processing method provided in the embodiments of this application, schedule information is obtained through at least one of several ways including a cloud server, a mailbox, scenario intelligence, and new schedule creating, and written into the schedule table. After the month view schedule unit detects that the user clicks the icon of the calendar APP, on the opened month view schedule interface, after the number representing "day" is clicked, whether there is a conflict between a plurality of schedules in the schedule table in time is queried for. If there is a conflict, a conflict marker in the schedule table is updated, and a notification is sent to the smart suggestion unit to trigger a conflict prompt. The smart suggestion unit prompts the conflict, and opens a day view schedule interface in response to a user instruction. The day view schedule unit adjusts a schedule time based on the user instruction, updates the schedule time, and notifies the smart suggestion unit to update a conflict suggestion. The smart suggestion unit further sends a notification to the pop-up window unit for processing conflicts to trigger conflict processing, and the pop-up window unit for processing conflicts processes conflicting schedules (reminding, ignoring, entrusting, and the like) in response to a user instruction, updates a conflict suggestion after the processing, and notifies the month view schedule unit to update the conflict display.

Conflict prompting and processing manners provided in the embodiments of this application are listed below.

### Manner 1:

The at least one control includes a first pop-up window and a first button, and conflict prompting and processing are performed based on the first pop-up window and the first button.

After it is determined that there is a conflict between the plurality of schedules to be executed of the current day, a first pop-up window is popped up on the first interface for a conflict prompt. The first interface may be any interface on which the application interacts with the user. The calendar APP is used as an example. In a possible implementation, the first interface may be a calendar month view interface, and the interface U22 shown in FIG. 2 may serve as the first interface. At least first text is displayed in the first pop-up window, and optionally, the first button may further be displayed. The first text is any kind of text content of which natural semantics is that there is a schedule conflict. The first button is a function button that triggers an event of opening a second interface, and is configured for the user to view which specific schedules have conflicts therebetween. For example, after the user clicks the first button, a corresponding second interface is opened for the user to view conflict details. For example, the second interface may be a day view interface on which at least two pieces of conflicting schedule information are displayed.

For example, referring to FIG. 2, a first pop-up window W1 is popped up on the interface U22, and the first text "You have two conflicting schedules, please arrange your time rationally" is displayed in the first pop-up window. In addition, a button B1 (that is, the first button) for viewing which two or several specific schedules conflict with each other is provided, and the text displayed on the button B1 is "View". The text on the button B1 may be a variety of words such as "Click to view details", "Details", "Modify", and the like, and is not limited to the word shown in FIG. 2. In addition, the first text displayed in the first pop-up window may be any text capable of representing natural semantics of conflicting, for example, may alternatively be words such as "There is a schedule conflict, please process it", "You have conflicting schedules", and "It is detected that there are at least two schedules having a conflict", and is not limited to the example shown in FIG. 2.

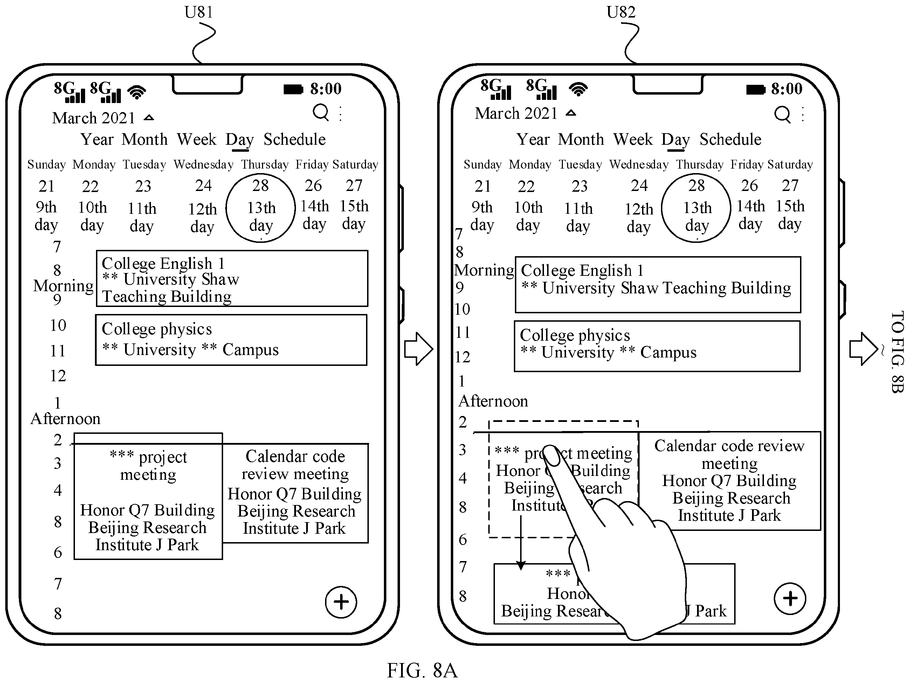

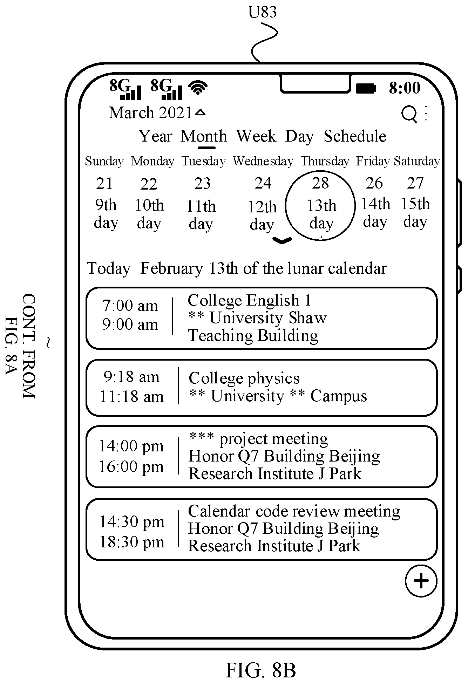

For example, it is detected that the user has performed a first operation on the first button B1. For example, the first operation may be a click (a single click). After the user clicks the button B1 in W1 in the first pop-up window, a day view interface U81 (second interface) shown in FIG. 8A and FIG. 8B is opened. It can be seen intuitively from the interface U81 in FIG. 8 A and FIG. 8B that there is a conflict between the two schedules "*** project meeting" and "Calendar code review meeting" in the afternoon.

Optionally, the user may adjust the times of conflicting schedules based on the second interface. When it is detected that the user performs any operation (second operation) of dragging, long pressing, clicking, or double-clicking by using one of the conflicting schedules as an operation object, a corresponding processing operation is performed. For example, when the user drags a schedule along the time axis, the time of the dragged schedule is modified according to the specific coordinate information of the user's dragging operation. For example, referring to the interface U82 in FIG. 8 A and FIG. 8B, the user drags the "*** project meeting" schedule along the time axis to be after Calendar code review meeting, and the time of the schedule is correspondingly modified to 6:00 to 8:00 pm according to the user's dragging position. Alternatively, when it is detected that the user has performed any operation of long pressing, clicking, or double-clicking on one of the conflicting schedules, a time selector is popped up to modify the time of the selected schedule. After the time is adjusted, referring to the interface U83 in FIG. 8 A and FIG. 8B. Compared with the interface U22 in FIG. 2, conflict prompting is no longer performed on the re-opened month view interface U83.

Optionally, the at least one control may further include a first label, where the first label may be set in the first pop-up window for waking up a voice assistant. After it is detected that the user performs a third operation with the first label as an operation object, the voice assistant is triggered to broadcast the first text. The third operation may alternatively be any one of clicking, double-clicking, and long pressing.

### Manner 2:

The at least one control may include a second label, and conflict prompting and processing are performed based on the second label.

Manner 1 provides a first entry (that is, the first button) for the user to view specific information of conflicting schedules and modify a schedule time. In Manner 2, after it is determined that there is a schedule conflict, a second entry for the user to process the conflict is provided on the first interface, and the second entry can be implemented based on interface interaction or voice interaction. For example, the second entry may be a control such as a button or a label for opening a conflict processing window. Alternatively, the second entry may be a voice interface provided by the voice playback manner, which can be realized through a smart voice assistant (such as "YOYO"). For example, when the smart voice assistant is awakened, the user can open the corresponding conflict processing window through a voice instruction.

A feasible manner implemented based on interface interaction is introduced below. The second entry is a function button set on the first interface. When a schedule list with a plurality of pieces of schedule information is displayed on the first interface, a second label may be displayed in display regions respectively corresponding to at least two conflicting schedules, and the semantics of a title text on the second label represents conflicting. For example, as shown in the month view interface U22 in FIG. 2, a schedule list including four schedules is shown under the month view interface. In the schedule list, there is a conflict between the schedule of which the event name (that is, the title name) is "***Project Meeting" and the schedule of which the event name is "Calendar code review meeting". Therefore, a second label B2 is respectively displayed in display regions corresponding to the two corresponding schedules in the day schedule list on the month view interface, and the text content displayed on the second label B2 is "conflict". As shown in the interface U22 in FIG. 2, the region inside the rounded rectangular box for displaying schedule information is the display region corresponding to the corresponding schedule. This display region may alternatively be understood as a control, and the control includes a second label. For example, the rounded rectangular box in which "*** project meeting" and "Honor Q7 Building Beijing Research Institute J Park" are displayed is the display region corresponding to the schedule "*** project meeting".

The text content of the second label may alternatively be other fields or characters that can represent conflicting meanings, so as to serve as a conflict prompt. It should be noted that the month view interface U22 in FIG. 2 simultaneously shows the first pop-up window W1 and the first button B1 set based on Manner 1 and the second label B2 set based on Manner 2, which is only an example.

Subsequently, in an implementation, it is detected that the user performs a fourth operation on the display region in which the second label is located, then the second pop-up window is opened. In this manner, the second label is not used as an independent operation object, but when the user performs an operation on the second label or a region near the second label, display of a second processing interface is triggered. For example, displaying the second processing interface may be popping up a second pop-up window.

For example, on the interface U22 in FIG. 2, the region inside the rounded rectangular box for displaying the schedule "Calendar code review meeting Honor Q7 Building Beijing Research Institute J Park" is the display region in which the second label B2 is located. The user long presses any position within the rounded rectangular box, and the second pop-up window can be triggered. The fourth operation may be operations such as double-clicking, long pressing, and sliding. For example, in a possible implementation, the long pressing operation is selected as the fourth operation. When it is detected that the user performs a long pressing operation on the second label or a region near the second label (within the rounded rectangular box), the second pop-up window is opened.

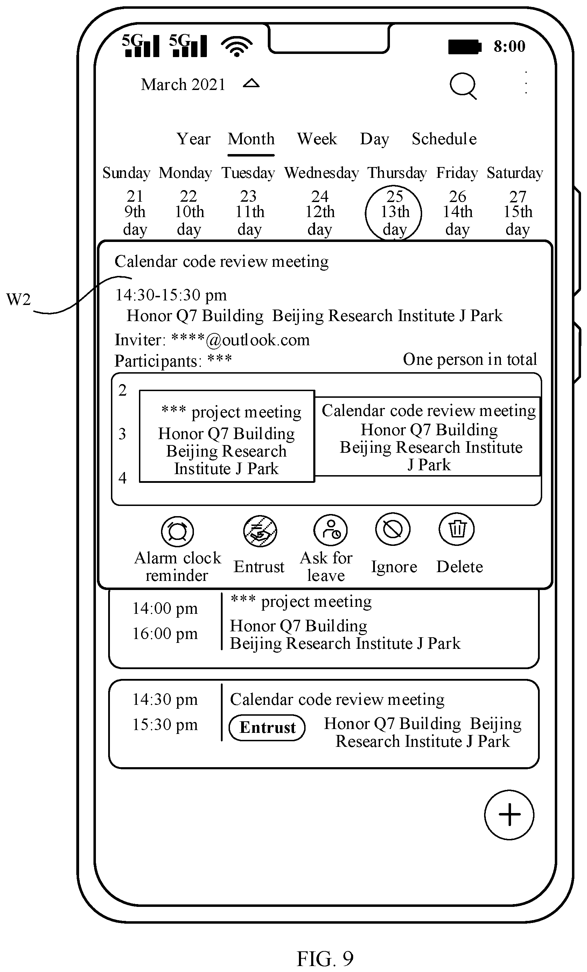

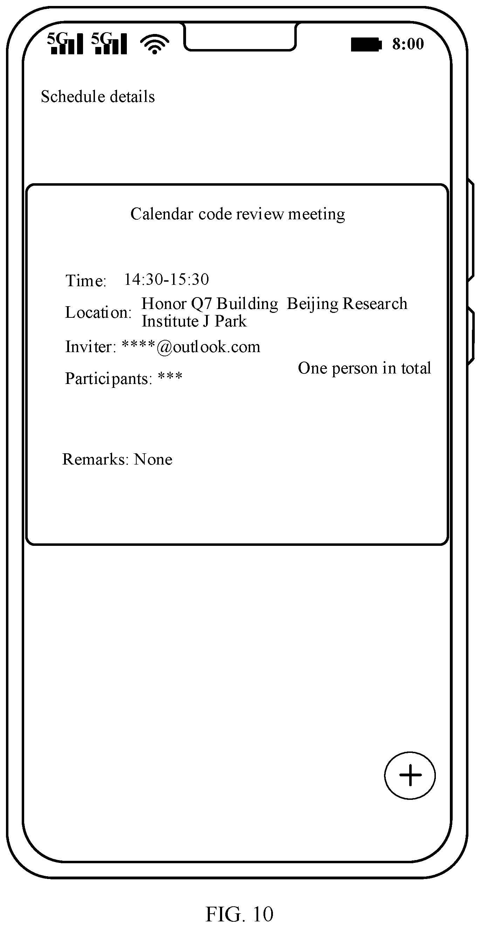

In another implementation, the second label may be used as an independent operable object. That is, the second label may be used as a separate button, and the user can open the second pop-up window by performing operations such as clicking on the button.
It should be noted that the operation of opening the second pop-up window can be distinguished from the operation of opening a schedule detail interface. For example, a long pressing operation is performed to open the second pop-up window, and a single-click operation is performed to open the schedule detail interface. The user long presses the second label B2 or long presses the display region corresponding to the corresponding schedule "Calendar code review meeting", and a second pop-up window W2 shown in FIG. 9 may be popped up. Information currently displayed in the second pop-up window W2 is detailed information of the Calendar review code meeting, indicating that the schedule is in a selected state. The user clicks the region corresponding to the schedule "Calendar code review meeting", then the schedule detail interface of the Calendar code review meeting can be opened, as shown in FIG. 10.

The second pop-up window is a window for the user to process conflicts, and is at least configured to display at least one candidate item for performing conflict processing on at least two schedules, where the candidate item includes at least one of reminding, entrusting, asking for leave, ignoring, deleting, and rejecting, that is, may be any one or any combination of reminding, entrusting, asking for leave, ignoring, deleting, and rejecting. Reminding may include a strong reminder and a weak reminder. The strong reminder may be an alarm clock reminder, and the weak reminder may be performing reminding in manners such as sending a system notification message.

In a possible implementation, five candidate items including "alarm clock reminder", "entrusting", "asking for leave", "ignoring" and "deleting" are set below the second pop-up window, to process conflicting schedules. The slash is used to mark a selected candidate item, that is, the entrusting candidate item is in a selected state, indicating that the user needs to perform entrusting processing for the schedule of Calendar code review meeting. The entrusting means entrusting the schedule to another person for execution on behalf of the user. After the user selects entrusting, the device automatically jumps to an operation interface of third-party applications such as a mailbox and an instant messaging application, and users can invite others to process the schedule on their behalf in manners such as sending an email and sending a message.

In another possible implementation, the candidate items for conflict processing displayed in the second pop-up window only include "ignoring, "deleting", and "alarm clock reminder"; or only include "entrusting", "asking for leave", and "deleting". After the user selects the "ignoring" candidate item, the item of the corresponding schedule in the schedule list becomes gray, and is no longer highlighted, indicating that the schedule is in a state of being unnecessary to be processed or being incapable of being processed. Subsequently, a fifth operation on the reminding candidate item is detected, and a reminding setting interface is jumped to; a first email editing interface is jumped to after a sixth operation on the entrusting candidate item is detected, where a recipient of the first email editing interface is an entrusted party; a second email editing interface is jumped to after a seventh operation on the ask-for-leave candidate item is detected, where a recipient of the second email editing interface is a leave approval party; and a selected schedule is respectively ignored, deleted, or rejected after it is detected that the user performs an eighth operation with the ignoring candidate item, the deleting candidate item, or the rejecting candidate item as an operation object.

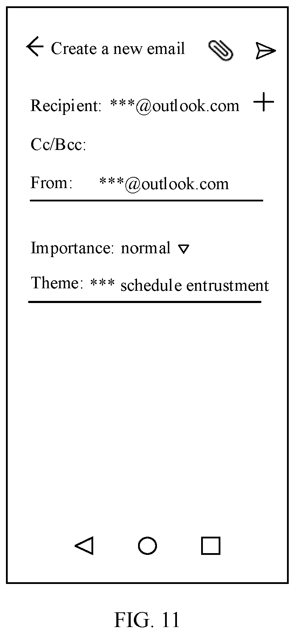

When it is detected that the user selects an "entrusting" button, a mailbox call event is triggered, to jump to a first email editing interface, and the identity (for example, an ID) of a target schedule to be entrusted to others (that is, the schedule in a selected state in the second pop-up window) is acquired. A call request carrying the identity of the target schedule is sent to start the mailbox and open a create-new-email interface, and an email address of at least one of the recipient (that is, the entrusted person), the sender (the principal), the carbon copy object, and the blind carbon copy object is automatically generated. In addition, the subject and content of the email are automatically generated to reduce user operations. For example, referring to FIG. 11, after the user clicks the "entrusting" button, the "create-new-email" interface shown in FIG. 11 is opened, and the subject is "*** schedule entrustment". Optionally, in another implementation, the content of the email body is automatically generated based on the target schedule, for example, "Hi, the sender *** requests to entrust you to process the *** schedule ...... ". The automatic generation of the content of the email body can be realized by calling a preset entrusting content template.

The sender's email address is generally considered to be an email address of a user that initiates the entrusting request by default. For the schedule information added through the schedule invitation based on an email, the email address of the inviter may be used as the email addres s of the recipient or the carbon copy object, and the email address for receiving the schedule invitation may be used as the sender's email address. In other scenarios, the email address information such as the recipient can prompt the user to perform inputting in advance, or after the create-new-email interface is opened, if the email address cannot be obtained automatically, the user will be prompted of "Failed to read the email address of the recipient. Please manually input the email address of the recipient".

After the email is sent successfully, the mailbox APP feeds a successful sending message back to the calendar APP in the form of a point-to-point message, or notifies the calendar APP by broadcasting. The calendar APP performs updating on the data segment of the schedule in the schedule table.

The processing manner corresponding to the "ask-for-leave" candidate item may alternatively be sending an email to the object responsible for approving a leave application by calling the mailbox. If it is detected that the user selects the "ask-for-leave" candidate item, then the second email editing interface is jumped to. On the second email editing interface, the email address of the object responsible for approving a leave application may be inputted in advance, that is, when the user creates a new schedule, the user will be prompted to input the email address information of the person asking for leave; or in a case that there is the acquisition permission, the email address information of the manager of the current user is acquired through intelligent identification, and automatically generated as the recipient's email address. When the user clicks the "ask-for-leave" button, the interface shown in FIG. 11 may also be triggered to be opened. Correspondingly, the subject name is modified to "***schedule leave application", and the content of the email body is modified. Details will not be repeated herein. The first email editing interface or the second email editing interface may be a create-new-email interface, a forwarding interface, or a replying interface.

The foregoing candidate items provide a convenient processing approach to assist users in effectively managing conflicting schedules.

It should be noted that in the second pop-up window W2 that is popped up, the conflicting schedules may be displayed side by side on the corresponding time axis, and may be dragged and dropped. The user may modify the time of the schedule by dragging and dropping one of the schedules., to avoid a conflict between the two schedules in time.

Method 1 provides a convenient manner of adjusting the schedule time, which is applicable to scenarios in which the schedule time can be adjusted; and Manner 2 provides more conflict processing manners, and is applicable to scenarios in which the schedule time cannot be adjusted.

During conflict processing, the conflict processing performed by the user is recorded according to the conflict processing behavior performed by the user. In a possible implementation, the display of the corresponding schedule on each interface is updated according to the conflict processing record, so that the user can intuitively see the processing information for previous schedules.

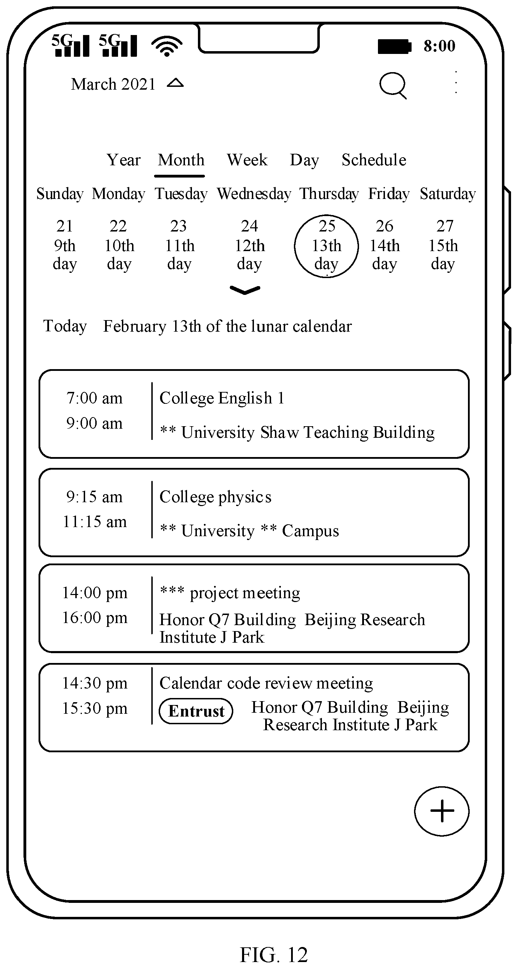

For example, refer to FIG. 12 for the updated first interface after the entrusting process is performed. There will be no longer a conflict prompt in the item corresponding to the *** project meeting. That is, the "conflict" button (that is, the second label) B2 will no longer be displayed. The text content of the corresponding second label in the item corresponding to Calendar code review meeting is modified from "conflict" to "entrusting" according to the conflict processing record, indicating that the user has performed entrusting processing on the schedule. In another possible implementation, when the conflict button is no longer displayed, the processing record is also not displayed, that is, the second label is no longer displayed. For example, the "entrusting" button is not displayed for the item of the schedule "Calendar code review meeting" in FIG. 12.

in a possible implementation, the user sets an alarm clock reminder schedule, and the "conflict" button is still displayed in the schedule list. The user sets an alarm clock reminder for the schedule, indicating that the routine is relatively important, so that even if the conflict processing is performed, the conflict prompting will continue until execution of the schedule is completed.

### Manner 3:

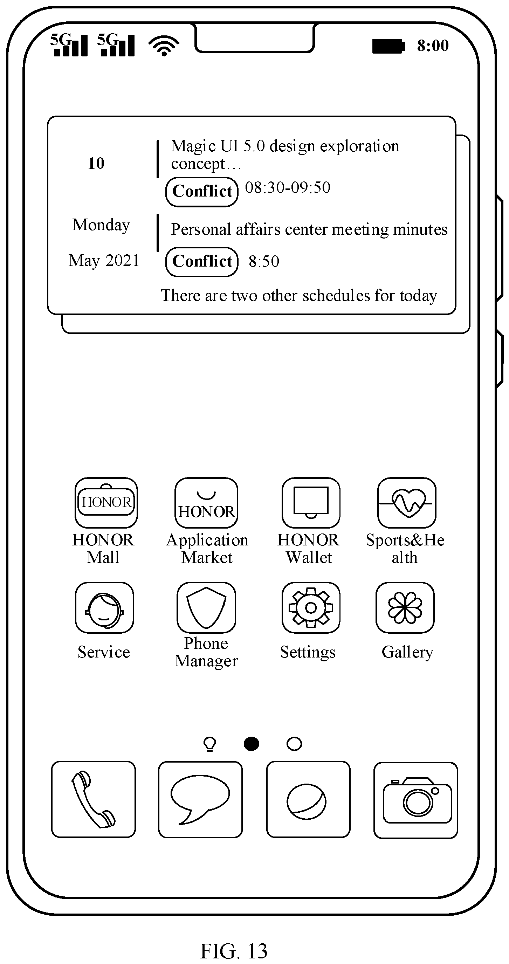

In this manner, a conflict button is displayed on a schedule card displayed through a desktop interface of the terminal device to prompt the user that there is a schedule conflict. For example, referring to FIG. 13, if there is a conflict between the schedule "Magic UI 5.0 design exploration concept..." and the schedule "Personal affairs center meeting minutes", a "conflict" button is respectively added to designated positions near labels of the two schedules.

It should be noted that the maintenance of the schedule information may be realized through a schedule table. For example, information such as schedule names, IDs assigned to schedules by the system, schedule times, and locations may be recorded in the schedule table. The schedule table is a data table with structured storage. For the conflict processing record of each schedule, a processing record table may be set separately to record the conflict processing operations for each schedule, so as to facilitate user query, or the conflict processing records may be written into the schedule table together.

For example, three schedules are used as an example. The schedule table including schedule conflict processing records is shown in Table 1 below:

**Table 1**

| Schedule ID | Name | Time | Location | Conflict | Reminding | Asking for leave | Entrusting | Ignoring | Deleting | Rej ecting |
|---|---|---|---|---|---|---|---|---|---|---|
| 000001 | *** meeting | *** | *** | Conflict with 000100 | 1 | 0 | 0 | 0 | 0 | 0 |
| 000100 | *** project | *** | **** | Conflict with 000001 | 0 | 0 | 1 | 0 | 0 | 0 |
| 000111 | Bodybuilding | *** | **** | 0 | 0 | 0 | 0 | 0 | 0 | 0 |

This table records marker bits respectively corresponding to the items such as reminding, entrusting, asking for leave, ignoring, deleting, and rejecting. If the marker is 1, it means that the user has performed this operation on the schedule. If the marker bit is 0, it means that the user has not performed this operation on the schedule. For example, for the schedule "***meeting" with the ID of 000001, the marker bit of the reminder item is 1, which means that the user has selected the "reminder" candidate in the conflict processing of the schedule.

Information such as the email address of the recipient of the email sent when entrusting or asking for leave can also be added to the above schedule.

It should be noted that the schedule is a data table for maintaining schedule information, and the schedule list is used to sequentially display the schedule information of each schedule on the interactive interface for the user.

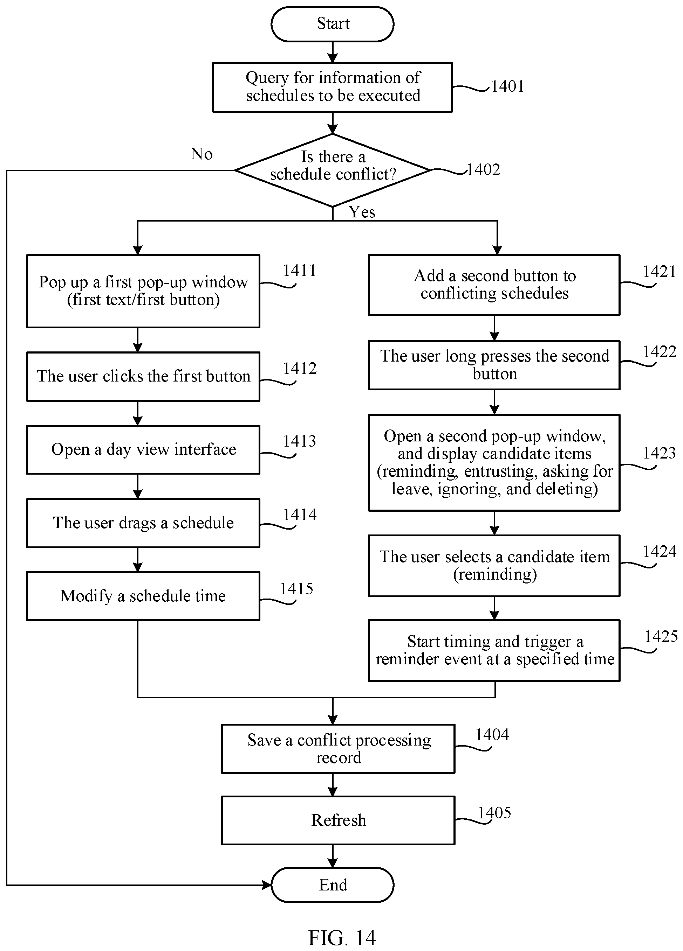

A specific example of the method provided in the embodiments of this application is listed below. As shown in FIG. 14, in the embodiment, the method may further include the following process:

Step 1401, query the schedule information to be executed on the current day;
in one possible implementation, step 1401 is triggered to be executed in response to the user's click operation on the calendar APP icon in the main interface or the click operation of selecting a certain day after opening the calendar.

Step 1402: Determine whether there is a conflict between at least two schedules? If there is a conflict, step 1411 and step 1421 is performed; and if there is no conflict, the process ends. In this embodiment, the process between step 1402 and step 1404 is divided into two branches for description, where the first branch includes steps 1411 to 1415, and the second branch includes steps 1421 to 1425.

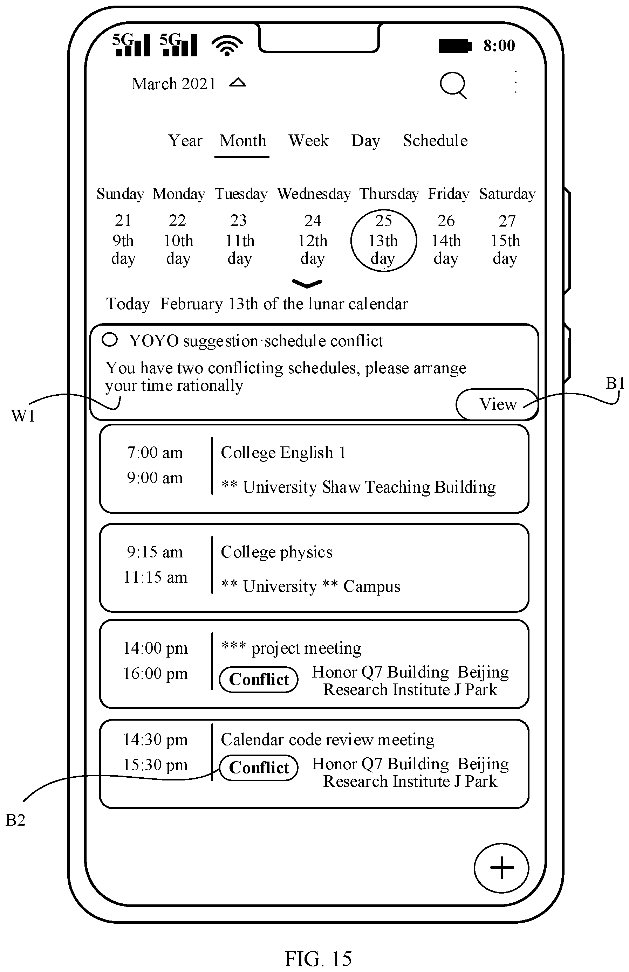

First process branch:
Step 1411: Pop up a first pop-up window on a first interface. A first text, a first button, and a label for waking up a voice assistant are displayed in the first pop-up window. For example, referring to FIG. 15, in addition to the first text "You have two conflicting schedules, please arrange your time rationally" and the first button B1, the first pop-up window W1 further includes a label L1, where text content of the label is " YOYO suggestion "schedule conflict", and this label can wake up the voice assistant. Optionally, when any operation such as clicking or long pressing performed by the user with the label as the operation object is detected, the voice assistant "YOYO" is awakened, and the text content of the first text is broadcast by voice. In addition, after the first text is broadcast by voice, the user may continue to be asked for that "YOYO can help you process conflicts, do you want to process the conflicts now?", that is, continue to interact with the user based on the voice interaction manner, and perform corresponding operations based on the user's voice instruction. Details are not described again in this embodiment.

Step 1412: Detect that the user clicks the first button B1.

Step 1413: Open a day view interface to display conflicting schedules.

Step 1414: Detect that the user performs a dragging operation on a schedule on the day view interface.

Step 1415: Modify a schedule time according to the user's dragging position.

Second process branch:
Step 1421: Add a "conflict" button (that is, a second label) to the conflicting schedules in the schedule list.

As already described in Manner 2 above, one manner of marking conflicts may be to add a second label B2 to display boxes corresponding to at least two detected conflicting schedules. In this embodiment, the month view interface of the calendar is used as the first interface. A first pop-up window is popped up on this interface and a second label is displayed on this interface, and the corresponding interface example is shown in FIG. 15. It should be noted that, in other embodiments, only the first pop-up window may be popped up or only the second label may be displayed. If only the first pop-up window is popped up on the first interface, a function button for opening the second pop-up window may be added to the opened second interface to realize conflict processing other than time modification; and if only the second label is displayed on the first interface, candidate items for modifying the time may further be added to the opened second pop-up window to realize time modification. It can be seen that, based on the technical solution provided in the embodiments of this application, various embodiments other than the listed embodiments or implementations can be obtained adaptively.

In step 1422: Detect that the user long presses the "conflict" button, and perform step 523.

Step 1423: Open a second pop-up window, and display a plurality of candidate items for processing schedule conflicts.

Step 1424: Detect a candidate item selected by the user.

For example, after the second pop-up window is opened, the user selects the "*** project meeting" schedule, and selects the "reminding" candidate item for this schedule, then the device will display the reminding candidate item to be in a selected state, for example, a highlighted state.

Step 1425: Start timing, trigger a reminder event at a specified time, and display corresponding schedule information on a reminder interface.

The reminding manner may be to push a text message and light up the screen when the screen is locked, or may be a weak reminding manner such as pushing a push message when the screen is unlocked, or may be a strong reminding manner such as an alarm clock reminder. Specifically, the corresponding option prompt box may be provided for the user to pre-select the reminding manner. Subsequently, step 1404 is performed.

Step 1404: Save a conflict processing record.

Step 1405: Refresh the first interface according to the conflict processing record.

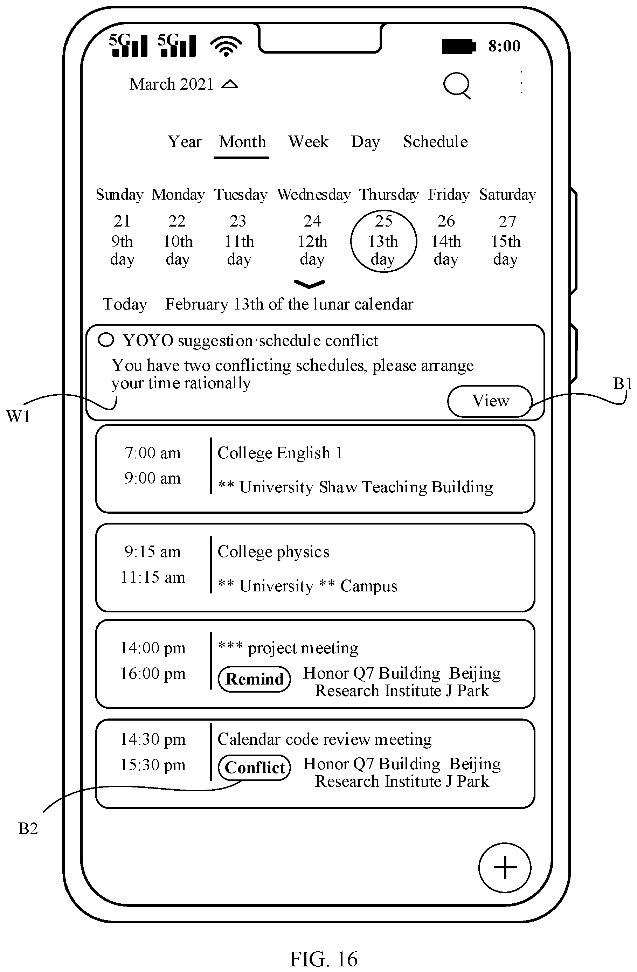

Refreshing the first interface may include refreshing the display of the first pop-up window and/or the second label, and refreshing the first pop-up window includes refreshing a YOYO label. For example, referring to FIG. 16, the schedule "Calendar code review meeting" after alarm clock reminder processing continues to retain the second label with the word "conflict", so as to more obviously prompt the user to execute the schedule. In another possible implementation, the second label of the "*** project meeting" is updated to "reminder", indicating that the schedule has been reminded. Alternatively, in another embodiment, the second label may be deleted, and the conflict marking and conflict processing record marking are no longer performed. If the user has not ignored or deleted the "Calendar review code meeting" and " * * * project meeting", and has not adjusted the schedule time, the conflict still exists, and the display of the first pop-up window on the first interface may be retained. In other embodiments, when there is no conflict between the plurality of schedules of the current day after processing by the user, the first pop-up window is no longer displayed.

It is to be understood that some or all steps or operations in the foregoing embodiments are only examples, and other operations or variations thereof may further be performed in the embodiments of this application. In addition, the steps may be performed in an order different from that presented in the foregoing embodiments, and the operations in the foregoing embodiments may not necessarily be all performed.

The software architecture for implementing the technical solution provided in the embodiments of this application will be exemplarily described below from the perspective of software implementation. The technical solution provided in the embodiments of this application may be implemented based on operating environments provided by operating systems such as Android, iOS (iPhone Operating System), windows phone, Symbian, BlackBerry OS, windows mobile, Harmony, Microsoft Windows, Unix, Linux, and Netware.

The software architecture shown in FIG. 4, FIG. 5A, and FIG. 5B describes a feasible design architecture of software functional modules from the perspective of function realization. Next, how to build the software layered architecture of the schedule conflict processing method provided in the embodiments of this application is described based on the perspective of the layered architecture of the operating system.

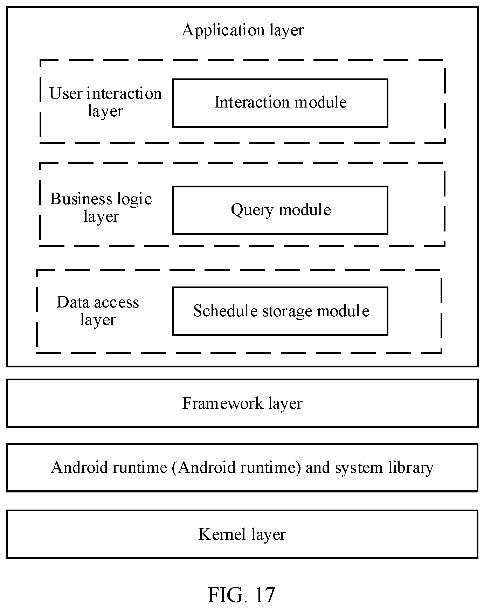

Referring to FIG. 17, in a possible implementation, an Android operating system is used as an example for illustration. A layered architecture of the Android (Android) system includes an application layer, a framework (Framework, FWK) layer, an Android runtime (Android runtime) and system library layer, and a kernel layer from top to bottom respectively. The technical solution provided in the embodiments of this application may be realized by designing the application layer and calling the application programming interface (Application Programming Interface, API) in the framework layer, without making changes to the Android runtime and system library layer and the kernel layer.

Specifically, the application layer may be further divided into a user interaction layer, a business logic layer, and a data access layer. In a possible implementation, the method provided in the embodiments of this application may be implemented through two software functional modules: a query module and an interaction module. Correspondingly, in a feasible layered architecture for implementing the technical solution of this application, a query module is configured on the business logic layer, a schedule storage module is configured on the data access layer, and an interaction module is configured on the user interaction layer.

The query module is configured to query information of schedules to be executed to determine whether there is conflict between at least two schedules; and the interaction module is configured to execute corresponding user interaction events according to the query results of the query module to prompt the user of the conflict. Specifically, the interaction module may prompt, on the first interface, the user that there is a conflict between at least two schedules when the query module detects that there is a schedule conflict. The schedule information to be queried by the query module may be stored in the calendar storage module. When a query is required, the query module acquires data from the calendar storage module and performs conflict determining.

The query module may include a month view schedule unit; and the interaction module may include a pop-up window unit for processing conflicts, a smart suggestion unit, and a day view schedule unit.

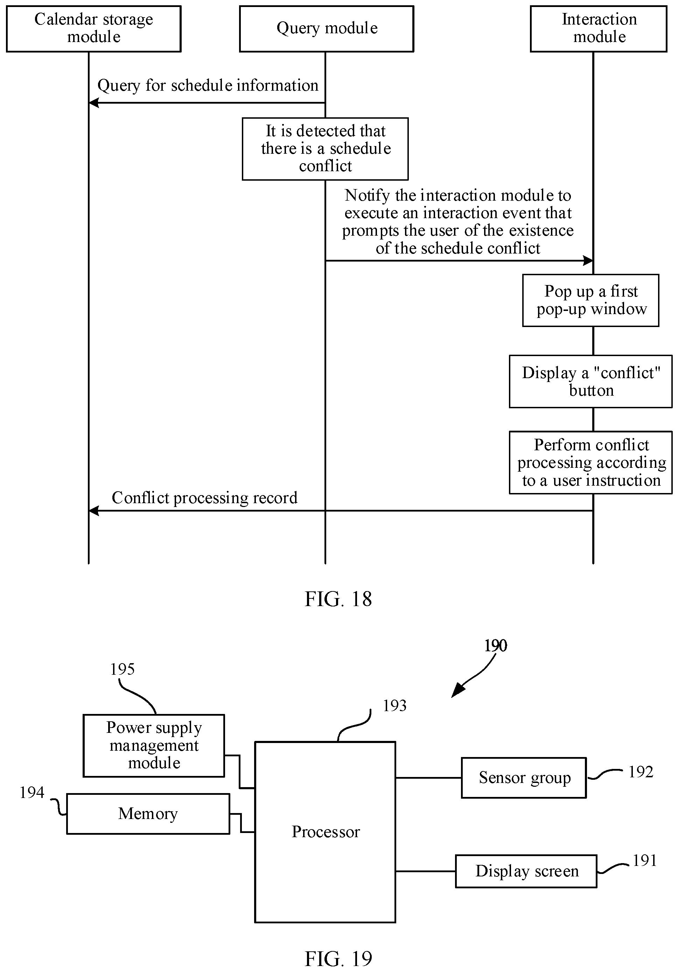

For example, referring to FIG. 18, the signaling process between the query module, the interaction module, and the calendar storage module may include:
The query module queries the schedule storage module (which may be, for example, a calendar storage module) for schedule information. After detecting that there is a schedule conflict, the query module notifies the interaction module to execute an interaction event for prompting the user that there is a schedule conflict. In response to the notification message, the interaction module executes a preset interaction event, for example, popping up the first pop-up window on the first interface, and adding a "conflict" button to the conflicting schedule items (item) in the schedule list, and performs a corresponding conflict processing operation according to the user's operation performed on the first button in the first pop-up window or the voice assistant label or the "conflict" button, and sends the conflict processing record to the schedule storage module for storage. The business logic of triggering the interaction event and performing which operation after the user operation is detected is implemented through the business logic control layer, and the corresponding control logic may be designed in the query module.

The function realization of the interaction module in the application layer needs to call the API (not shown in the figure) in the framework layer to realize the interaction. For example, the window program may be managed by calling the window manager Window Manager, or the schedule information data of the third-party application may be accessed by calling the content provider Content Providers, the corresponding schedule list, the text box of the first text, and controls such as the first button and the second label may be constructed by calling the view manager View System. Alternatively, the notification manager Notification Manager may be called to set the prompt information displayed in the status bar for a schedule conflict prompt.

The embodiments of this application further provide an electronic device, including a memory configured to store program instructions and a processor configured to execute the program instructions, the program instructions, when executed by the processor, triggering the electronic device to perform the following steps:
querying information of schedules to be executed, and in a case that it is determined that there is a conflict between at least two schedules, prompting, on the first interface, the user that there is a conflict between at least two schedules, where the first interface is any interface through which the application interacts with the user.

The electronic device provided in the embodiments of this application is illustrated from the perspective of hardware implementation.

FIG. 19 shows a feasible product hardware architecture of an electronic device 190 according to an embodiment of this application. The hardware architecture of the electronic device 190 may include:
a display screen 191, where various operations of prompting the user that there is a schedule conflict in an interface interaction manner need to be realized through the display and sensing of the display screen. For example, the display screen 191 realizes the display of the interfaces shown in FIG. 2 and FIG. 3, FIG. 6 to FIG. 13, FIG. 15 to FIG. 16 and other drawings. Specifically, the display screen 191 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 190 may include two or more display screens 191.

Specifically, the display screen 191 may be a touch screen integrating touch and display functions, for example, a capacitive touch screen, to be configured to sense the user's operations such as clicking and long pressing on the first button or label and the second label in the first pop-up window shown on the display screen. Specifically, the display screen 191 may sense a pressure signal generated by the user through a pressure sensor, convert the pressure signal into an electrical signal, and complete the user instruction input. The pressure sensor may be a resistive pressure sensor, an inductive pressure sensor, a capacitive pressure sensor, or the like. When an operation such as clicking or long pressing is performed on the display screen 191, the electronic device 190 detects strength of the touch operation by using the pressure sensor, and calculates a touch position according to a detection signal of the pressure sensor.

The processor 193 includes one or more processing units. For example, the processor 193 may include an application processor (application processor, AP), a modem processor, a graphics processing unit (graphics processing unit, GPU), an image signal processor (image signal processor, ISP), a controller, and a digital signal processor (digital signal processor, DSP). Different processing units may be separate devices, or may be integrated into one or more processors.

The memory 194 is configured to store data such as schedule information and conflict processing record information. The memory 194 may be an external memory independent of the processor 192, or may be set in the processor 193. For example, in some embodiments, the memory built into the processor 193 may be a cache, and is configured to store an instruction or data that has just been used or cyclically used by the processor 193. If the processor 193 needs to use the instruction or the data again, the processor may directly invoke the instruction or the data from the cache, to avoid repeated access and reduce a waiting time of the processor 193.

The memory 194 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or may be any another medium that can be used to carry or store desired program code in the form of an instruction or a data structure and that can be accessed by a computer.

The power management module 195 receives input of the battery and/or the charging management module, and supplies power for the processor 193, the memory 194, the display screen 191. The power management module 195 may also be configured to monitor parameters such as a battery capacity, a quantity of battery cycles, and a battery health status (power leakage and impedance). In some other embodiments, the power management module 195 may alternatively be disposed in the processor 193. In some other embodiments, the power management module 195 and the charging management module may alternatively be disposed in a same device.

It may be understood that the schematic structure in each drawing in this embodiment of this application constitutes no specific limitation on the electronic device 190. In some other embodiments of this application, the electronic device 190 may include more or fewer components than those shown in the figure, or some components may be combined, or some components may be divided, or different component arrangements may be used. The components in the portrait may be implemented by hardware, software, or a combination of software and hardware.

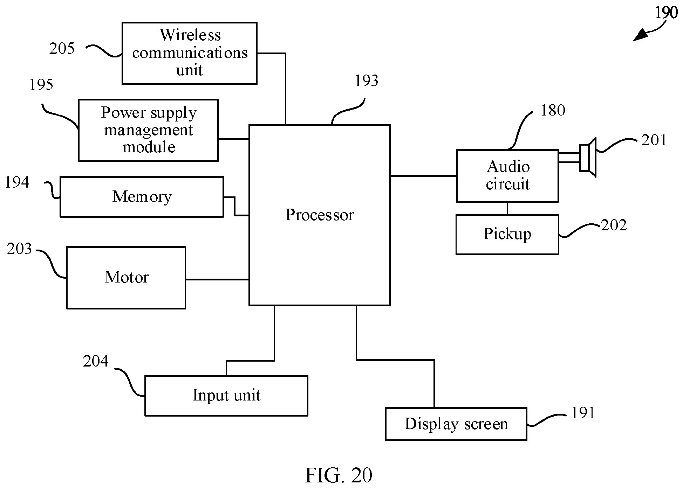

For example, in a possible implementation, referring to FIG. 20, the electronic device 190 may further include:
a speaker 201, a pickup 202, and an audio circuit 180, where the speaker 201 is connected to the processor 193 through the audio circuit, and is configured to play voice corresponding to first text after the user wakes up the YOYO voice assistant. For example, when the display screen 191 of the electronic device 190 displays the interface shown in FIG 15, after YOYO is awakened, a voice broadcast "You have two conflicting schedules, it is recommended to check and process it to avoid an impact on your itinerary" is performed, and the pickup 202 picks up the user's voice, and detects whether the user issues a viewed voice instruction.

The motor 203 provides vibration power for the electronic device 190. For example, in the second pop-up window, when the user selects an alarm clock reminder, the motor can vibrate during reminding.

The input unit 204 is used for inputting user instructions, which may be a hardware device such as a keyboard, a mouse, and a stylus.

The wireless communications unit 205 is configured to perform wireless communication with the cloud server to obtain schedule information remotely. Specifically, the wireless communications unit 205 may be one or more devices that integrate at least one communications processing module. The wireless communications module receives an electromagnetic wave through an antenna, performs frequency modulation and filtering processing on the electromagnetic wave signal, and sends the processed signal to the processor 193. The wireless communications unit 205 may further receive a to-be-sent signal from the processor 193, perform frequency modulation and amplification on the to-be-sent signal, and convert the signal into an electromagnetic wave for radiation through the antenna.

In a possible implementation, the processor 193 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a general-purpose input/output (general-purpose input/output, GPIO), a universal serial bus (universal serial bus, USB) interface, and/or the like.

The processor 193 may include a plurality of groups of I2C buses, and the processor 192 may be coupled to modules such as the power management module 195 through different I2C bus interfaces. For example, the processor 193 may be coupled to the display screen 191 through the I2C interface, so that the processor 193 communicates with the display screen 191 through the I2C bus interface.

In a possible implementation, the processor 193 may include a plurality of groups of I2S buses, where the I2S interface may be configured for audio communication. The processor 193 may be coupled to the audio circuit 180 by using the I2S bus, to implement communication between the processor 192 and the audio circuit 180, and then the speaker 201 is controlled to emit sound.

The embodiments of this application further provide a storage medium, storing program instructions, the program instructions, when run on an electronic device, causing the electronic device to perform the method according to any one of the foregoing embodiments.

The embodiments of this application further provide a software program product, including program instructions, the program instructions, when run on an electronic device, causing the electronic device to perform the method according to any one of the foregoing embodiments.

It should be understood that the term "unit" or "module" in the embodiments of this application may be implemented in the form of software and/or hardware, which is not specifically limited. For example, "unit" may be a software program, a hardware circuit or a combination of both to realize the foregoing functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions.

Therefore, the exemplary units and modules described in the embodiments of this application can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of this application.

Further, generally, improvements to a technology can be clearly distinguished as improvements in hardware (e.g. improvements to circuit structures such as diodes, transistors, switches, etc.) or software (improvements to method processes). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) (for example, a field programmable gate array (FPGA)) is a type of an integrated circuit whose logic function is determined by a visitor by programming the device. Designers program a digital device "integrated" on a PLD instead of requiring chip manufacturers to design and make dedicated integrated circuit chips. Moreover, nowadays, instead of manually making integrated circuit chips, this programming is mostly implemented by using "logic compiler" software, which is similar to the software compiler used in program development and writing. The original code is written in a specific programming language before compiling, and this language is referred to as a hardware description language (HDL). There are various kinds of HDLs, for example, advanced Boolean expression language (ABEL), altera hardware description language (AHDL), Confluence, Cornell university programming language (CUPL), HDCal, Java hardware description language (JHDL), Lava, Lola, MyHDL, PALASM, Ruby hardware description language (RHDL), and the like. Currently, the most commonly used HDLs are very-high-speed integrated circuit hardware description language (VHDL) and Verilog. A person skilled in the art should also understand that provided that a method procedure is logically programmed and then programmed to an integrated circuit by using the foregoing hardware description languages, a hardware circuit that implements the logical method procedure can be easily obtained.

Therefore, the method process provided in this embodiment of this application may be implemented in a hardware manner. For example, a controller is used to control a touchscreen to implement the method process provided in this embodiment of this application.

The controller may be implemented in any suitable manner. For example, the controller may take the form of a computer readable medium, a logic gate, a switch, an application specific integrated circuit (Application Specific Integrated Circuit, ASIC), a programmable logic controller, and an embedded microcontroller that store computer readable program code (such as software or firmware) executable by a microprocessor or a processor. Examples of the controller include but are not limited to the following microcontrollers: ARC 625D, Atmel AT91SAM, Microchip PIC18F26K20, and Silicone Labs C8051F320. The memory controller may also be implemented as part of the control logic of the memory. A person skilled in the art also appreciates that, in addition to implementing the controller in the form of pure computer-readable program code, it is also possible to implement, by logically programming the method steps, the controller in the form of a logic gate, switch, ASIC, programmable logic controller, and embedded microcontroller and other forms to achieve the same function. Such a controller can thus be considered as a hardware component, and apparatuses included therein for implementing various functions can also be considered as structures inside the hardware component. Alternatively, apparatuses configured to implement various functions can be considered as both software modules implementing the method and structures inside the hardware component.

It should be understood that in the embodiments of this application, "first", "second", and the like are merely used to refer to different objects, and do not mean that there are other limitations on the referred objects.

In the embodiments of this application, "at least one" refers to one or more, and "a plurality of" refers to two or more. And/or describes an association relationship for describing associated objects and represents that three relationships may exist. For example, A and/or B may represent the following cases: Only A exists, both A and B exist, and only B exists. A and B may be singular or plural. The character "/" in this specification generally indicates an "or" relationship between the associated objects. "At least one of the following" or a similar expression thereof refers to any combination of these items, including one item or any combination of a plurality of items. For example, at least one of a, b, or c may represent a, b, c, "a-b", "a-c", "b-c", or "a-b-c", where a, b, and c may be singular or plural.

A person of ordinary skill in the art may be aware that the modules and algorithm steps described in the embodiments disclosed herein can be implemented by a combination of electronic hardware, computer software, and electronic hardware. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of this application.

A person skilled in the art may clearly understand that, for simple and clear description, for specific work processes of the foregoing described system, apparatus, and module, reference may be made to corresponding process in the foregoing method embodiments, and details are not described herein again.

In several embodiments provided in this application, when any function is implemented in the form of a software functional unit and sold or used as an independent product, the functions may be stored in a (computer) readable storage medium. Based on such an understanding, the technical solutions of this application essentially, or the part contributing to the prior art, or some of the technical solutions may be implemented in a form of a software product. The software product is stored in a storage medium, and includes several instructions for instructing a terminal device (which may be a mobile phone, a personal computer, or the like) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or a compact disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A schedule conflict processing method, comprising the steps of:
determining (1402) existence of a schedule conflict;
displaying (1411) a first interface (U22), wherein the first interface (U22) comprises at least a first control and a second control each configured to prompt a user of the existence of the schedule conflict;
detecting (1412) a target operation of the user on the first control or the second control; and
displaying (1413) at least one processing interface in response to the target operation, wherein the at least one processing interface is configured to process schedule conflicts; wherein
the first control comprises a first pop-up window (W1) and a first button (B1);
the second control comprises a second label (B₂) in a schedule list;
the displaying (1413) the first interface comprises displaying the first pop-up window (W1) and the schedule list, wherein the first button (B1) and first text are displayed in the first pop-up window (W1), the first text is used for expressing semantics of existence of a conflict between at least two schedules, the schedule list includes the at least two schedules, the second label (B₂) is respectively displayed in display regions of the at least two schedules, second text is displayed on the second label (B₂) and semantics of the second text is conflicting;
the detecting (1412) the target operation of the user on the first control or on the second control comprises detecting a first operation of the user on the first button (B1) or detecting a fourth operation of the user on the second label (B₂) or on a display region corresponding to the second label (B₂); and
the displaying (1413) at least one processing interface in response to the target operation of the user comprises:
if the first operation is detected, displaying a first processing interface (U81) in response to the first operation of the user, wherein the first processing interface (U81) is configured to modify schedule times of one of the at least two schedules; and
if the fourth operation is detected, displaying a second processing interface (W₂) including at least one candidate item used for conflict processing, wherein the at least one candidate item comprises at least one of the following candidate items: reminding, entrusting, asking for leave, deleting, and rejecting, in the second processing interface, the conflicting schedules are displayed side by side on a corresponding time axis, and the user may modify the time of the schedule by dragging and dropping the one of the schedules.

2. The method according to claim 1, wherein after the displaying the first processing interface (U81), the method further comprises:
displaying the at least two schedules on the first processing interface (U81); and
detecting (1414) a second operation of the user on the one of the at least two schedules, and performing (1415) a first processing operation corresponding to the second operation of the user, wherein
the second operation of the user comprises one of dragging, long pressing, clicking, and double-clicking; and
the first processing operation comprises: modifying a time of the one dragged schedule according to a dragging operation by the user; or popping up, according to one operation of long pressing, clicking, and double-clicking by the user, a time selector to modify a time of the one selected schedule.

3. The method according to claim 1, wherein
the first control further comprises a first label used for waking up a voice assistant;
the displaying the first interface further comprises:
displaying the first label in the first pop-up window (W₁);
the detecting (1412) the target operation of the user on the first control comprises:
detecting a third operation of the user on the first label; and
after the detecting (1412) the target operation of the user on the first control, the method further comprises:
triggering the voice assistant to broadcast the first text through voice.

4. The method according to claim 1, wherein after the displaying at least one candidate item used for conflict processing on the second processing interface (W₂), the method further comprises:
detecting a selection operation of the user on the at least one candidate item, and performing a second processing operation, wherein the second processing operation comprises any one of the following processing operations:
detecting a fifth operation of the user on the reminding candidate item, and jumping to a reminding setting interface;
jumping to a first email editing interface after a sixth operation of the user on the entrusting candidate item is detected, wherein a recipient of the first email editing interface is an entrusted party;
jumping to a second email editing interface after a seventh operation of the user on the ask-for-leave candidate item is detected, wherein a recipient of the second email editing interface is a leave approval party; and
respectively ignoring, deleting, or rejecting a selected schedule after it is detected that the user performs an eighth operation of the user with the ignoring candidate item, the deleting candidate item, or the rejecting candidate item as an operation object.

5. The method according to claim 2, wherein after the performing a first processing operation corresponding to the second operation of the user, the method further comprises:
refreshing (1405) the first control according to the first processing operation or the second processing operation.

6. The method according to claim 4, wherein after the performing a second processing operation, the method further comprises:
refreshing (1405) the second control according to the first processing operation or the second processing operation.

7. An electronic device (190), comprising a memory (194) configured to store program instructions and a processor (193) configured to execute the program instructions, the program instructions, when executed by the processor (193), triggering the electronic device (190) to perform the method according to any one of claims 1 to 6.

8. A storage medium, storing program instructions, the program instructions, when run on an electronic device (190), causing the electronic device (190) to perform the method according to any one of claims 1 to 6.

9. A software program product, comprising program instructions, the program instructions, when run on an electronic device (190), causing the electronic device (190) to perform the method according to any one of claims 1 to 6.

## Patentansprüche

1. Verfahren zur Verarbeitung von Zeitplankonflikten, umfassend die Schritte:
Bestimmen (1402) des Bestehens eines Zeitplankonflikts;
Anzeigen (1411) einer ersten Schnittstelle (U22), wobei die erste Schnittstelle (U22) mindestens ein erstes Steuerelement und ein zweites Steuerelement umfasst, die jeweils dazu konfiguriert sind, einen Benutzer auf das Bestehen des Zeitplankonflikts hinzuweisen;
Erkennen (1412) einer Zieloperation des Benutzers auf dem ersten Steuerelement oder dem zweiten Steuerelement; und
Anzeigen (1413) mindestens einer Verarbeitungsschnittstelle als Reaktion auf die Zieloperation, wobei die mindestens eine Verarbeitungsschnittstelle dazu konfiguriert ist, Zeitplankonflikte zu verarbeiten; wobei
das erste Steuerelement ein erstes Pop-up-Fenster (W1) und eine erste Schaltfläche (B1) umfasst;
das zweite Steuerelement eine zweite Beschriftung (B2) in einer Zeitplanliste umfasst;
das Anzeigen (1413) der ersten Schnittstelle das Anzeigen des ersten Pop-up-Fensters (W1) und der Zeitplanliste umfasst, wobei die erste Schaltfläche (B1) und ein erster Text im ersten Pop-up-Fenster (W1) angezeigt werden, der erste Text dazu dient, die Semantik des Bestehens eines Konflikts zwischen mindestens zwei Zeitplänen auszudrücken, die Zeitplanliste die mindestens zwei Zeitpläne enthält, die zweite Beschriftung (B₂) jeweils in Anzeigebereichen der mindestens zwei Zeitpläne angezeigt wird, ein zweiter Text auf der zweiten Beschriftung (B2) angezeigt wird und die Semantik des zweiten Textes in Konflikt steht;
das Erkennen (1412) der Zieloperation des Benutzers auf dem ersten Steuerelement oder dem zweiten Steuerelement das Erkennen einer ersten Operation des Benutzers auf der ersten Schaltfläche (B1) oder das Erkennen einer vierten Operation des Benutzers auf der zweiten Beschriftung (B₂) oder auf einem der zweiten Beschriftung (B₂) entsprechenden Anzeigebereich umfasst; und
das Anzeigen (1413) mindestens einer Verarbeitungsschnittstelle als Reaktion auf die Zieloperation des Benutzers umfasst:
falls die erste Operation erkannt wird, Anzeigen einer ersten Verarbeitungsschnittstelle (U81) als Reaktion auf die erste Operation des Benutzers, wobei die erste Verarbeitungsschnittstelle (U81) dazu konfiguriert ist, Zeitplanzeiten eines der mindestens zwei Zeitpläne zu ändern; und
falls die vierte Operation erkannt wird, Anzeigen einer zweiten Verarbeitungsschnittstelle (W2), die mindestens ein Kandidatenelement zur Konfliktverarbeitung enthält, wobei das mindestens eine Kandidatenelement mindestens eines der folgenden Kandidatenelemente umfasst:
Erinnern, Beauftragen, Urlaub beantragen, Löschen und Ablehnen; in der zweiten Verarbeitungsschnittstelle werden die in Konflikt stehenden Zeitpläne nebeneinander auf einer entsprechenden Zeitachse angezeigt, und der Benutzer kann die Zeit des Zeitplans durch Drag-and-Drop eines der Zeitpläne ändern.

2. Verfahren nach Anspruch 1, wobei nach dem Anzeigen der ersten Verarbeitungsschnittstelle (U81) das Verfahren ferner umfasst:
Anzeigen der mindestens zwei Zeitpläne auf der ersten Verarbeitungsschnittstelle (U81); und
Erkennen (1414) einer zweiten Benutzeroperation auf einem der mindestens zwei Zeitpläne und Durchführen (1415) einer ersten Verarbeitungsoperation entsprechend der zweiten Benutzeroperation, wobei
die zweite Benutzeroperation eine der folgenden Aktionen umfasst: Ziehen, langes Drücken, Klicken und Doppelklicken; und
die erste Verarbeitungsoperation umfasst: Ändern einer Zeit des einen gezogenen Zeitplans gemäß einer Ziehoperation durch den Benutzer; oder Einblenden eines Zeitauswahl-Tools gemäß einer der Benutzeroperationen langes Drücken, Klicken oder Doppelklicken, um eine Zeit des einen ausgewählten Zeitplans zu ändern.

3. Verfahren nach Anspruch 1, wobei
das erste Steuerelement ferner ein erstes Label zum Aufwecken eines Sprachassistenten umfasst;
das Anzeigen der ersten Schnittstelle ferner umfasst:
Anzeigen des ersten Labels im ersten Pop-up-Fenster (W1);
das Erkennen (1412) der Zieloperation des Benutzers auf dem ersten Steuerelement umfasst:
Erkennen einer dritten Benutzeroperation auf dem ersten Label; und
nach dem Erkennen (1412) der Zieloperation des Benutzers auf dem ersten Steuerelement das Verfahren ferner umfasst:
Auslösen des Sprachassistenten, um den ersten Text per Sprache auszugeben.

4. Verfahren nach Anspruch 1, wobei nach dem Anzeigen mindestens eines Kandidatenelements zur Konfliktverarbeitung auf der zweiten Verarbeitungsschnittstelle (W2) das Verfahren ferner umfasst:
Erkennen einer Auswahloperation des Benutzers auf dem mindestens einen Kandidatenelement und Durchführen einer zweiten Verarbeitungsoperation, wobei die zweite Verarbeitungsoperation eine der folgenden Verarbeitungsoperationen umfasst:
Erkennen einer fünften Benutzeroperation auf dem Erinnerungs-Kandidatenelement und Springen zu einer Erinnerungseinstellungsschnittstelle;
Springen zu einer ersten E-Mail-Bearbeitungsschnittstelle, nachdem eine sechste Benutzeroperation auf dem Beauftragungs-Kandidatenelement erkannt wurde, wobei ein Empfänger der ersten E-Mail-Bearbeitungsschnittstelle eine beauftragte Partei ist;
Springen zu einer zweiten E-Mail-Bearbeitungsschnittstelle, nachdem eine siebte Benutzeroperation auf dem Urlaubsantrag-Kandidatenelement erkannt wurde, wobei ein Empfänger der zweiten E-Mail-Bearbeitungsschnittstelle eine Genehmigungspartei für Urlaubsanträge ist; und
bzw. Ignorieren, Löschen oder Ablehnen eines ausgewählten Zeitplans, nachdem erkannt wurde, dass der Benutzer eine achte Operation mit dem Ignorier-Kandidatenelement, dem Lösch-Kandidatenelement oder dem Ablehn-Kandidatenelement als Operationsobjekt durchführt.

5. Verfahren nach Anspruch 2, wobei das Verfahren nach dem Ausführen einer ersten Verarbeitungsoperation, die der zweiten Operation des Benutzers entspricht, ferner umfasst:
Aktualisieren (1405) des ersten Steuerelements gemäß der ersten Verarbeitungsoperation oder der zweiten Verarbeitungsoperation.

6. Verfahren nach Anspruch 4, wobei das Verfahren nach dem Ausführen einer zweiten Verarbeitungsoperation ferner umfasst:
Aktualisieren (1405) des zweiten Steuerelements gemäß der ersten Verarbeitungsoperation oder der zweiten Verarbeitungsoperation.

7. Elektronische Vorrichtung (190), umfassend einen Speicher (194), der zum Speichern von Programmanweisungen konfiguriert ist, und einen Prozessor (193), der zum Ausführen der Programmanweisungen konfiguriert ist, wobei die Programmanweisungen, wenn sie durch den Prozessor (193) ausgeführt werden, die elektronische Vorrichtung (190) dazu veranlassen, das Verfahren nach einem der Ansprüche 1 bis 6 auszuführen.

8. Speichermedium, das Programmanweisungen speichert, wobei die Programmanweisungen, wenn sie auf einer elektronischen Vorrichtung (190) ausgeführt werden, die elektronische Vorrichtung (190) dazu veranlassen, das Verfahren nach einem der Ansprüche 1 bis 6 auszuführen.

9. Softwareprogrammprodukt, umfassend Programmanweisungen, wobei die Programmanweisungen, wenn sie auf einer elektronischen Vorrichtung (190) ausgeführt werden, die elektronische Vorrichtung (190) dazu veranlassen, das Verfahren nach einem der Ansprüche 1 bis 6 auszuführen.

## Revendications

1. Procédé de traitement de conflit d'agenda, comprenant les étapes consistant à :
déterminer (1402) l'existence d'un conflit d'agenda ;
afficher (1411) une première interface (U22), dans laquelle la première interface (U22) comprend au moins une première commande et une seconde commande configurées chacune pour avertir un utilisateur de l'existence du conflit d'agenda ;
détecter (1412) une opération cible de l'utilisateur sur la première commande ou la seconde commande ; et
afficher (1413) au moins une interface de traitement en réponse à l'opération cible, dans laquelle l'au moins une interface de traitement est configurée pour traiter des conflits d'agenda ; dans lequel
la première commande comprend une première fenêtre contextuelle (W1) et un premier bouton (B1) ;
la seconde commande comprend une seconde étiquette (B₂) dans une liste d'agendas ;
l'affichage (1413) de la première interface comprend l'affichage de la première fenêtre contextuelle (W1) et de la liste d'agendas, dans lequel le premier bouton (B1) et un premier texte sont affichés dans la première fenêtre contextuelle (W1), le premier texte est utilisé pour exprimer la sémantique de l'existence d'un conflit entre au moins deux agendas, la liste d'agendas inclut les au moins deux agendas, la seconde étiquette (B2) est affichée respectivement dans des zones d'affichage des au moins deux agendas, un second texte est affiché sur la seconde étiquette (B2) et la sémantique du second texte est conflictuelle ;
la détection (1412) de l'opération cible de l'utilisateur sur la première commande ou sur la seconde commande comprend la détection d'une première opération de l'utilisateur sur le premier bouton (B1) ou la détection d'une quatrième opération de l'utilisateur sur la seconde étiquette (B2) ou sur une zone d'affichage correspondant à la seconde étiquette (B2) ; et
l'affichage (1413) d'au moins une interface de traitement en réponse à l'opération cible de l'utilisateur comprend :
si la première opération est détectée, l'affichage d'une première interface de traitement (U81) en réponse à la première opération de l'utilisateur, dans laquelle la première interface de traitement (U81) est configurée pour modifier les horaires d'agenda de l'un des au moins deux agendas ; et
si la quatrième opération est détectée, l'affichage d'une seconde interface de traitement (W2) incluant au moins un élément candidat utilisé pour le traitement de conflit, dans lequel l'au moins un élément candidat comprend au moins l'un des éléments candidats suivants : rappel, délégation, demande de congé, suppression et rejet, dans la seconde interface de traitement, les agendas conflictuels sont affichés côte à côte sur un axe temporel correspondant, et l'utilisateur peut modifier l'horaire de l'agenda par glisser-déposer de l'un des agendas.

2. Procédé selon la revendication 1, dans lequel après l'affichage de la première interface de traitement (U81), le procédé comprend en outre :
l'affichage des au moins deux calendriers sur la première interface de traitement (U81) ; et
la détection (1414) d'une seconde opération de l'utilisateur sur l'un des au moins deux calendriers, et l'exécution (1415) d'une première opération de traitement correspondant à la seconde opération de l'utilisateur, dans lequel
la seconde opération de l'utilisateur comprend l'une parmi un glisser, un appui long, un clic et un double-clic ; et
la première opération de traitement comprend : la modification d'une heure du calendrier glissé selon une opération de glisser effectuée par l'utilisateur ; ou l'apparition, selon une opération parmi un appui long, un clic et un double-clic effectuée par l'utilisateur, d'un sélecteur d'heure pour modifier une heure du calendrier sélectionné.

3. Procédé selon la revendication 1, dans lequel
le premier contrôle comprend en outre une première étiquette utilisée pour réveiller un assistant vocal ;
l'affichage de la première interface comprend en outre :
l'affichage de la première étiquette dans la première fenêtre contextuelle (W1) ;
la détection (1412) de l'opération cible de l'utilisateur sur le premier contrôle comprend :
la détection d'une troisième opération de l'utilisateur sur la première étiquette ; et
après la détection (1412) de l'opération cible de l'utilisateur sur le premier contrôle, le procédé comprend en outre :
le déclenchement de l'assistant vocal pour diffuser le premier texte par la voix.

4. Procédé selon la revendication 1, dans lequel après l'affichage d'au moins un élément candidat utilisé pour le traitement de conflit sur la seconde interface de traitement (W2), le procédé comprend en outre :
la détection d'une opération de sélection de l'utilisateur sur l'au moins un élément candidat, et l'exécution d'une seconde opération de traitement, dans lequel la seconde opération de traitement comprend l'une quelconque des opérations de traitement suivantes :
la détection d'une cinquième opération de l'utilisateur sur l'élément candidat de rappel, et le saut vers une interface de réglage de rappel ;
le saut vers une première interface d'édition d'e-mail après la détection d'une sixième opération de l'utilisateur sur l'élément candidat de délégation, dans lequel un destinataire de la première interface d'édition d'e-mail est une partie déléguée ;
le saut vers une seconde interface d'édition d'e-mail après la détection d'une septième opération de l'utilisateur sur l'élément candidat de demande de congé, dans lequel un destinataire de la seconde interface d'édition d'e-mail est une partie chargée de l'approbation des congés ; et
ignorer, supprimer ou rejeter respectivement un calendrier sélectionné après qu'il a été détecté que l'utilisateur effectue une huitième opération de l'utilisateur avec l'élément candidat d'ignorance, l'élément candidat de suppression ou l'élément candidat de rejet en tant qu'objet d'opération.

5. Procédé selon la revendication 2, dans lequel après l'exécution d'une première opération de traitement correspondant à la deuxième opération de l'utilisateur, le procédé comprend en outre :
rafraîchissement (1405) du premier contrôle selon la première opération de traitement ou la deuxième opération de traitement.

6. Procédé selon la revendication 4, dans lequel après l'exécution d'une deuxième opération de traitement, le procédé comprend en outre :
rafraîchissement (1405) du second contrôle selon la première opération de traitement ou la deuxième opération de traitement.

7. Dispositif électronique (190), comprenant une mémoire (194) configurée pour stocker des instructions de programme et un processeur (193) configuré pour exécuter les instructions de programme, les instructions de programme, lorsqu'elles sont exécutées par le processeur (193), déclenchant le dispositif électronique (190) pour exécuter le procédé selon l'une quelconque des revendications 1 à 6.

8. Support de stockage, stockant des instructions de programme, les instructions de programme, lorsqu'elles sont exécutées sur un dispositif électronique (190), amenant le dispositif électronique (190) à exécuter le procédé selon l'une quelconque des revendications 1 à 6.

9. Produit de programme logiciel, comprenant des instructions de programme, les instructions de programme, lorsqu'elles sont exécutées sur un dispositif électronique (190), amenant le dispositif électronique (190) à exécuter le procédé selon l'une quelconque des revendications 1 à 6.
